(19) Europäisches Patentamt
European Patent Office
Office européen des brevets

(11) **EP 4 633 269 A1**

(12) **EUROPEAN PATENT APPLICATION**
published in accordance with Art. 153(4) EPC

(43) Date of publication:
**15.10.2025  Bulletin 2025/42**

(21) Application number: **23910294.0**

(22) Date of filing: **20.12.2023**

(51) International Patent Classification (IPC):
*H04W 72/21* (2023.01)

(52) Cooperative Patent Classification (CPC):
**H04L 5/00; H04W 24/08; H04W 24/10;
H04W 72/21; H04W 72/23**

(86) International application number:
**PCT/CN2023/140196**

(87) International publication number:
**WO 2024/140365 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022  CN 202211701382**

(71) Applicant: **Huawei Technologies Co., Ltd.
Shenzhen, Guangdong 518129 (CN)**

(72) Inventors:
• **PANG, Xu
  Shenzhen, Guangdong 518129 (CN)**
• **XU, Rui
  Shenzhen, Guangdong 518129 (CN)**
• **QIN, Yi
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND RELATED DEVICE**

(57)  This application provides a communication method and a related device, to reduce a communication delay, so as to improve communication efficiency. In the method, a terminal device starts a first timer after sending first information, where the first information is used to request an uplink resource, and the first timer indicates a time window for monitoring a physical downlink control channel (physical downlink control channel, PDCCH); and the terminal device receives second information on the PDCCH before the first timer expires, where the second information indicates the uplink resource.

FIG. 5

## Description

This application claims priority to Chinese Patent Application No. 202211701382.1, filed with the China National Intellectual Property Administration on December 28, 2022 and entitled "COMMUNICATION METHOD AND RELATED DEVICE", which is incorporated herein by reference in its entirety.

## TECHNICAL FIELD

This application relates to the field of communication technologies, and in particular, to a communication method and a related device.

## BACKGROUND

In a communication system, a process in which a terminal device sends a signal to a network device may be referred to as an uplink communication process, and a process in which the network device sends a signal to the terminal device may be referred to as a downlink communication process.

Currently, because uplink communication resources are limited, the terminal device usually needs to perform a resource request process to obtain an uplink communication resource. In a possible implementation, the terminal device may send a scheduling request (scheduling request, SR) to the network device, to indicate, by using the SR, that the terminal device requires an uplink resource. After the terminal device receives an indication that is from the network device and that is in response to the SR, the terminal device sends a buffer status report (buffer status report, BSR) to the network device, to indicate, by using the BSR, an amount of uplink resources required by the terminal device. Then, the terminal device can send uplink data to the network device only after receiving an indication that is from the network device and that is in response to the BSR.

However, in the foregoing implementation process, the terminal device needs to perform a plurality of interaction processes corresponding to the SR and the BSR to obtain an uplink resource grant. As a result, an increase in a delay is prone to occur, affecting communication efficiency.

## SUMMARY

This application provides a communication method and a related device, to reduce a communication delay, so as to improve communication efficiency.

A first aspect of this application provides a communication method. The method is performed by a terminal device, or the method is performed by a part of components (for example, a processor, a chip, or a chip system) in the terminal device, or the method may be implemented by a logic module or software that can implement all or some functions of the terminal device. In the first aspect and possible implementations of the first aspect, an example in which the communication method is performed by the terminal device is used for description. In the method, the terminal device starts a first timer after sending first information, where the first information is used to request an uplink resource, and the first timer indicates a time window for monitoring a physical downlink control channel (physical downlink control channel, PDCCH); and the terminal device receives second information on the PDCCH before the first timer expires, where the second information indicates the uplink resource.

According to the foregoing technical solution, after sending the first information used to request the uplink resource, the terminal device receives, on the PDCCH before the first timer expires, the second information indicating the uplink resource, and sends uplink data based on the uplink resource, where the first timer indicates the time window for monitoring the PDCCH. In other words, the terminal device monitors the PDCCH in the time window indicated by the first timer, and may subsequently send the uplink data based on the second information that is detected on the PDCCH and that indicates the uplink resource. Therefore, compared with an implementation in which an uplink resource grant can be obtained only by using a plurality of interaction processes corresponding to an SR and a BSR, in the foregoing solution, an uplink resource determining process can be implemented through exchange of the first information and the second information between the terminal device and a network device, so that a communication delay can be reduced, to improve communication efficiency.

Optionally, the uplink resource requested by using the first information may be referred to as a grant resource, a dynamic grant (dynamic grant, DG) resource, or another name. This is not limited herein.

In a possible implementation of the first aspect, the first information is carried in an $N^{th}$ time unit in N time units included in a configured grant (configured grant, CG) resource, where N is a positive integer greater than 1.

Optionally, the $N^{th}$ time unit in the N time units included in the CG resource may be expressed as a last time unit in the N time units included in the CG resource, a last time unit in the CG resource, a last CG PUSCH, or another expression. This is not limited herein.

According to the foregoing technical solution, a time domain resource used to carry the first information is included in the CG resource, and the time domain resource is specifically the $N^{th}$ time unit in the N time units included in the CG resource, so that both the terminal device and the network device can determine to perform transmission of the first information in the $N^{th}$ time unit, to reduce implementation complexity.

Optionally, the time unit in this application may include an orthogonal frequency division multiplexing (orthogonal frequency division multiplexing, OFDM) symbol, a frame, a subframe, a slot, or the like.

In a possible implementation of the first aspect, the first information is carried in a $k^{th}$ time unit in N time units included in a CG resource, where N is a positive integer greater than 1, and k is a positive integer less than N.

Optionally, the $k^{th}$ time unit in the N time units included in the CG resource may be expressed as a non-last time unit in the N time units included in the CG resource, a non-last time unit in the CG resource, a non-last CG PUSCH, or another expression. This is not limited herein.

According to the foregoing technical solution, a time domain resource used to carry the first information is included in the CG resource, and the time domain resource is specifically the $k^{th}$ time unit in the N time units included in the CG resource, so that both the terminal device and the network device can determine to perform transmission of the first information in a time unit other than an $N^{th}$ time unit, to reduce implementation complexity and improve solution implementation flexibility.

In a possible implementation of the first aspect, the first information is used to request an uplink resource corresponding to first data; and that the terminal device sends the first information includes: The terminal device sends the first information when an amount of the first data is greater than 0.

According to the foregoing technical solution, for the terminal device, the uplink resource requested by using the first information is used for transmission of the first data, that is, the first data is to-be-sent uplink data. Therefore, the terminal device sends, only when determining that the first data is greater than 0, the first information used to request the uplink resource, so that unnecessary overheads can be avoided.

In a possible implementation of the first aspect, the amount of the first data is determined based on a difference between a total data amount and a transmitted data amount.

Optionally, the first information and a part or all of transmitted data are located on a same resource (for example, the CG resource).

Optionally, the total data amount may be determined based on an obtained resource amount. For example, the total data amount is equal to the obtained resource amount. For another example, the total data amount is a difference between the obtained resource amount and a predetermined threshold.

According to the foregoing technical solution, for the terminal device, the amount of the to-be-sent first data may be determined based on the difference between the total data amount and the transmitted data amount. Therefore, the foregoing technical solution can be applied to a scenario in which data transmission is performed based on an obtained resource (for example, the CG resource) and there is still remaining data to-be-sent, so that the terminal device can quickly obtain the uplink resource in the scenario, and the communication delay is reduced.

In a possible implementation of the first aspect, the transmitted data amount includes any one of the following: an amount of data allowed to be transmitted on the CG resource within preset duration; an amount of data allowed to be transmitted on the CG resource within duration indicated by a packet delay budget (packet delay budget, PDB); or an amount of data allowed to be transmitted in one or more CG transmission opportunities in the CG resource.

According to the foregoing technical solution, the transmitted data amount used to determine the amount of the first data may be determined based on any one of the foregoing items, to improve the solution implementation flexibility.

In a possible implementation of the first aspect, the first information includes at least either of the following: first indication information, indicating that the first data is not empty; or second indication information, indicating the amount of the first data.

According to the foregoing technical solution, the first information indicating the uplink resource may include at least either of the information, to improve the solution implementation flexibility.

In a possible implementation of the first aspect, the first information is carried in a buffer status report (buffer status report, BSR); the first information is carried in uplink control information (uplink control information, UCI); or the first information is carried in a BSR and UCI.

According to the foregoing technical solution, the first information indicating the uplink resource may be carried in at least one of the foregoing items, to improve the solution implementation flexibility.

In a possible implementation of the first aspect, the first timer includes any one of the following: a discontinuous reception (discontinuous reception, DRX) inactivity timer (Inactivity Timer); an activity timer (Activity Timer) of a DG resource; a DRX uplink retransmission timer (drx-RetransmissionTimerUL); or a time window length indicated by a monitoring slot periodicity and offset (monitoringSlotPeriodicityAndOffset).

According to the foregoing technical solution, when the first timer includes the DRX inactivity timer, the DRX uplink retransmission timer, or the time window length indicated by the monitoring slot periodicity and offset, the first timer may share implementations of these timers, to reduce overheads. When the first timer includes the activity timer of the DG resource, the first timer may not depend on an implementation of another timer, so that flexibility of configuring the first timer can be improved.

In a possible implementation of the first aspect, that the terminal device starts the first timer after sending the first information includes: The terminal device starts a second timer after sending the first information, and starts the first timer when the second timer expires, where the second timer indicates waiting time.

According to the foregoing technical solution, after sending the first information, the terminal device may start the first timer after the waiting time, to reserve sufficient time for transmission/processing of the first information.

Optionally, the waiting time may be understood as time for which the terminal device waits to start the first timer. For example, the waiting time may include at least either of time for transmission of the first information or time for processing the first information by a receiver of the first information (namely, the network device).

In a possible implementation of the first aspect, the second timer includes any one of the following: a discontinuous reception uplink hybrid automatic repeat request round trip time timer (uplink hybrid automatic repeat request round trip time timer, drx-HARQ-RTT-TimerUL); a HARQ-RTT timer of the DG resource; or a monitoring waiting time (monitoringwaitingtime) timer.

According to the foregoing technical solution, when the second timer includes the DRX HARQ-RTT timer or the monitoring waiting time timer, the second timer may share implementations of these timers, to reduce overheads. When the first timer includes the HARQ-RTT timer of the DG resource, the second timer may not depend on an implementation of another timer, so that flexibility of configuring the second timer can be improved.

A second aspect of this application provides a communication method. The method is performed by a network device, or the method is performed by a part of components (for example, a processor, a chip, or a chip system) in the network device, or the method may be implemented by a logic module or software that can implement all or some functions of the network device. In the second aspect and possible implementations of the second aspect, an example in which the communication method is performed by the network device is used for description. In the method, the network device starts a first timer after receiving first information, where the first information is used to request an uplink resource, and the first timer indicates a time window for monitoring a physical downlink control channel PDCCH; and the network device sends second information before the first timer expires, where the second information indicates the uplink resource.

According to the foregoing technical solution, after receiving the first information used to request the uplink resource, the network device sends, on the PDCCH before the first timer expires, the second information indicating the uplink resource, so that a terminal device can subsequently send uplink data based on the uplink resource, where the first timer indicates the time window for monitoring the PDCCH. In other words, the terminal device monitors the PDCCH in the time window indicated by the first timer, and may subsequently send the uplink data based on the second information that is detected on the PDCCH and that indicates the uplink resource. Therefore, compared with an implementation in which an uplink resource grant can be obtained only by using a plurality of interaction processes corresponding to an SR and a BSR, in the foregoing solution, an uplink resource determining process can be implemented through exchange of the first information and the second information between the terminal device and the network device, so that a communication delay can be reduced, to improve communication efficiency.

Optionally, the uplink resource requested by using the first information may be referred to as a grant resource, a dynamic grant (dynamic grant, DG) resource, or another name. This is not limited herein.

In a possible implementation of the second aspect, the first information is carried in an $N^{th}$ time unit in N time units included in a configured grant CG resource, where N is a positive integer greater than 1.

Optionally, the $N^{th}$ time unit in the N time units included in the CG resource may be expressed as a last time unit in the N time units included in the CG resource, a last time unit in the CG resource, or another expression. This is not limited herein.

According to the foregoing technical solution, a time domain resource used to carry the first information is included in the CG resource, and the time domain resource is specifically the $N^{th}$ time unit in the N time units included in the CG resource, so that both the terminal device and the network device can determine to perform transmission of the first information in the $N^{th}$ time unit, to reduce implementation complexity.

Optionally, the time unit in this application may include an orthogonal frequency division multiplexing (orthogonal frequency division multiplexing, OFDM) symbol, a frame, a subframe, a slot, or the like.

In a possible implementation of the second aspect, the first information is carried in a $k^{th}$ time unit in N time units included in a CG resource, where N is a positive integer greater than 1, and k is a positive integer less than N.

Optionally, the $k^{th}$ time unit in the N time units included in the CG resource may be expressed as a non-last time unit in the N time units included in the CG resource, a non-last time unit in the CG resource, or another expression. This is not limited herein.

According to the foregoing technical solution, a time domain resource used to carry the first information is included in the CG resource, and the time domain resource is specifically the $k^{th}$ time unit in the N time units included in the CG resource, so that both the terminal device and the network device can determine to perform transmission of the first information in a time unit other than an $N^{th}$ time unit, to reduce implementation complexity and improve solution implementation flexibility.

In a possible implementation of the second aspect, the first information is used to request an uplink resource corresponding to first data; and that the network device sends the second information includes: The network device sends the second information when an amount of the first data is greater than 0.

According to the foregoing technical solution, for the terminal device, the uplink resource requested by using the first information is used for transmission of the first data, that is, the first data is to-be-sent uplink data. Therefore, the network device sends, only when determining that the first data is greater than 0, the second information indicating the uplink resource, so that unnecessary overheads can be avoided.

In a possible implementation of the second aspect, the amount of the first data is determined based on a difference between a total data amount and a transmitted data amount.

Optionally, the first information and a part or all of transmitted data are located on a same resource (for example, the CG resource).

Optionally, the total data amount may be determined based on an obtained resource amount. For example, the total data amount is equal to the obtained resource amount. For another example, the total data amount is a difference between the obtained resource amount and a predetermined threshold.

According to the foregoing technical solution, for the terminal device, the amount of the to-be-sent first data may be determined based on the difference between the total data amount and the transmitted data amount. Therefore, the foregoing technical solution can be applied to a scenario in which data transmission is performed based on an obtained resource (for example, the CG resource) and there is still remaining data to-be-sent, so that the terminal device can quickly obtain the uplink resource in the scenario, and the communication delay is reduced.

In a possible implementation of the second aspect, the transmitted data amount includes any one of the following: an amount of data allowed to be transmitted on the CG resource within preset duration; an amount of data allowed to be transmitted on the CG resource within duration indicated by a packet delay budget PDB; or an amount of data allowed to be transmitted in one or more CG transmission opportunities in the CG resource.

According to the foregoing technical solution, the transmitted data amount used to determine the amount of the first data may be determined based on any one of the foregoing items, to improve the solution implementation flexibility.

In a possible implementation of the second aspect, the first information includes at least either of the following: first indication information, indicating that the first data is not empty; or second indication information, indicating the amount of the first data.

According to the foregoing technical solution, the first information indicating the uplink resource may include at least either of the information, to improve the solution implementation flexibility.

In a possible implementation of the second aspect, the first information is carried in a buffer status report BSR; the first information is carried in uplink control information UCI; or the first information is carried in a BSR and UCI.

According to the foregoing technical solution, the first information indicating the uplink resource may be carried in at least one of the foregoing items, to improve the solution implementation flexibility.

In a possible implementation of the second aspect, the first timer includes any one of the following: a discontinuous reception DRX inactivity timer; an activity timer of a DG resource; a DRX uplink retransmission timer; or a time window length indicated by a monitoring slot periodicity and offset.

According to the foregoing technical solution, when the first timer includes the DRX inactivity timer, the DRX uplink retransmission timer, or the time window length indicated by the monitoring slot periodicity and offset, the first timer may share implementations of these timers, to reduce overheads. When the first timer includes the activity timer of the DG resource, the first timer may not depend on an implementation of another timer, so that flexibility of configuring the first timer can be improved.

A third aspect of this application provides a communication apparatus. The apparatus may implement the method according to the first aspect or any possible implementation of the first aspect. The apparatus includes a corresponding unit or module configured to perform the method. The unit or module included in the apparatus can be implemented by software and/or hardware. For example, the apparatus may be a terminal device, the apparatus may be a component (for example, a processor, a chip, or a chip system) in the terminal device, or the apparatus may be a logic module or software that can implement all or some functions of the terminal device.

The apparatus includes a processing unit and a transceiver unit. The processing unit starts a first timer after the transceiver unit sends first information, where the first information is used to request an uplink resource, and the first timer indicates a time window for monitoring a physical downlink control channel PDCCH; and the processing unit receives second information on the PDCCH before the first timer expires, where the second information indicates the uplink resource.

In a possible implementation of the third aspect, the first information is carried in an $N^{th}$ time unit in N time units included in a configured grant CG resource, where N is a positive integer greater than 1.

In a possible implementation of the third aspect, the first information is carried in a $k^{th}$ time unit in N time units included in a CG resource, where N is a positive integer greater than 1, and k is a positive integer less than N.

In a possible implementation of the third aspect, the first information is used to request an uplink resource corresponding to first data.

The transceiver unit is specifically configured to send the first information when an amount of the first data is greater than 0.

In a possible implementation of the third aspect, the amount of the first data is determined based on a difference between a total data amount and a transmitted data amount.

In a possible implementation of the third aspect, the transmitted data amount includes any one of the following: an amount of data allowed to be transmitted on the CG resource within preset duration; an amount of data allowed to be transmitted on the CG resource within duration indicated by a packet delay budget PDB; or an amount of data allowed to be transmitted in one or more CG transmission opportunities in the CG resource.

In a possible implementation of the third aspect, the first information includes at least either of the following: first indication information, indicating that the first data is not empty; or second indication information, indicating the amount of the first data.

In a possible implementation of the third aspect, the first information is carried in a buffer status report BSR; the first information is carried in uplink control information UCI; or the first information is carried in a BSR and UCI.

In a possible implementation of the third aspect, the first timer includes any one of the following: a discontinuous reception DRX inactivity timer; an activity timer of a DG resource; a DRX uplink retransmission timer; or a time window length indicated by a monitoring slot periodicity and offset.

In a possible implementation of the third aspect, the processing unit starts a second timer after the transceiver unit sends the first information, and the processing unit starts the first timer when the second timer expires, where the second timer indicates waiting time.

In a possible implementation of the third aspect, the second timer includes any one of the following: a drx-HARQ-RTT-TimerUL; a HARQ-RTT timer of the DG resource; or a monitoring waiting time timer.

A fourth aspect of this application provides a communication apparatus. The apparatus may implement the method according to the second aspect or any possible implementation of the second aspect. The apparatus includes a corresponding unit or module configured to perform the method. The unit or module included in the apparatus can be implemented by software and/or hardware. For example, the apparatus may be a network device, the apparatus may be a component (for example, a processor, a chip, or a chip system) in the network device, or the apparatus may be a logic module or software that can implement all or some functions of the network device.

The apparatus includes a processing unit and a transceiver unit. The processing unit starts a first timer after the transceiver unit receives first information, where the first information is used to request an uplink resource, and the first timer indicates a time window for monitoring a physical downlink control channel PDCCH; and the transceiver unit sends second information before the first timer expires, where the second information indicates the uplink resource.

In a possible implementation of the fourth aspect, the first information is carried in an $N^{th}$ time unit in N time units included in a configured grant CG resource, where N is a positive integer greater than 1.

In a possible implementation of the fourth aspect, the first information is carried in a $k^{th}$ time unit in N time units included in a CG resource, where N is a positive integer greater than 1, and k is a positive integer less than N.

In a possible implementation of the fourth aspect, the first information is used to request an uplink resource corresponding to first data; and the transceiver unit sends the second information when an amount of the first data is greater than 0.

In a possible implementation of the fourth aspect, the amount of the first data is determined based on a difference between a total data amount and a transmitted data amount.

In a possible implementation of the fourth aspect, the transmitted data amount includes any one of the following: an amount of data allowed to be transmitted on the CG resource within preset duration; an amount of data allowed to be transmitted on the CG resource within duration indicated by a packet delay budget PDB; or an amount of data allowed to be transmitted in one or more CG transmission opportunities in the CG resource.

In a possible implementation of the fourth aspect, the first information includes at least either of the following: first indication information, indicating that the first data is not empty; or second indication information, indicating the amount of the first data.

In a possible implementation of the fourth aspect, the first information is carried in a buffer status report BSR; the first information is carried in uplink control information UCI; or the first information is carried in a BSR and UCI.

In a possible implementation of the fourth aspect, the first timer includes any one of the following: a discontinuous reception DRX inactivity timer; an activity timer of a DG resource; a DRX uplink retransmission timer; or a time window length indicated by a monitoring slot periodicity and offset.

A fifth aspect of this application provides a communication apparatus, including at least one processor. The at least one processor is coupled to a memory. The processor is configured to perform the method according to the first aspect or any possible implementation of the first aspect.

For example, the memory is configured to store a program or instructions. The at least one processor is configured to execute the program or the instructions, to enable the apparatus to implement the method according to the first aspect or any possible implementation of the first aspect.

A sixth aspect of this application provides a communication apparatus, including at least one processor. The at least one processor is coupled to a memory. The processor is configured to perform the method according to the second aspect or any possible implementation of the second aspect.

For example, the memory is configured to store a program or instructions. The at least one processor is configured to execute the program or the instructions, to enable the apparatus to implement the method according to the second aspect or any possible implementation of the second aspect.

A seventh aspect of this application provides a communication apparatus, including at least one logic circuit and an input/output interface. The logic circuit is configured to perform the method according to the first aspect or any possible implementation of the first aspect.

An eighth aspect of this application provides a communication apparatus, including at least one logic circuit and an input/output interface. The logic circuit is configured to perform the method according to the second aspect or any possible implementation of the second aspect.

A ninth aspect of this application provides a computer-readable storage medium storing one or more computer-executable instructions. When the computer-executable instructions are executed by a processor, the processor performs the method according to the first aspect or any possible implementation of the first aspect, or the processor performs the method according to the second aspect or any possible implementation of the second aspect.

A tenth aspect of this application provides a computer program product (or referred to as a computer program). When the computer program product is executed by a processor, the processor performs the method according to the first aspect or any possible implementation of the first aspect, or the processor performs the method according to the second aspect or any possible implementation of the second aspect.

An eleventh aspect of this application provides a chip system. The chip system includes at least one processor, configured to support a communication apparatus in implementing a function in the first aspect or any possible implementation of the first aspect, or configured to support a communication apparatus in implementing a function in the second aspect or any possible implementation of the second aspect.

In a possible design, the chip system may further include a memory. The memory is configured to store program instructions and data that are necessary for the communication apparatus. The chip system may include a chip, or may include a chip and another discrete device. Optionally, the chip system further includes an interface circuit. The interface circuit provides program instructions and/or data for the at least one processor.

A twelfth aspect of this application provides a communication system. The communication system includes the communication apparatus in the third aspect and the communication apparatus in the fourth aspect, the communication system includes the communication apparatus in the fifth aspect and the communication apparatus in the sixth aspect, and/or the communication system includes the communication apparatus in the seventh aspect and the communication apparatus in the eighth aspect.

For the technical effects brought by any one of the designs of the third aspect to the twelfth aspect, refer to the technical effects brought by the first aspect and the second aspect and different designs of the first aspect or the second aspect. Details are not described herein again.

**BRIEF DESCRIPTION OF DRAWINGS**

FIG. 1 is a diagram of a communication system according to this application;
FIG. 2 is a diagram of a communication process according to this application;
FIG. 3a is another diagram of a communication process according to this application;
FIG. 3b is another diagram of a communication process according to this application;
FIG. 3c is another diagram of a communication process according to this application;
FIG. 3d is another diagram of a communication process according to this application;
FIG. 4a is another diagram of a communication process according to this application;
FIG. 4b is another diagram of a communication process according to this application;
FIG. 4c is another diagram of a communication process according to this application;
FIG. 4d is another diagram of a communication process according to this application;
FIG. 5 is a diagram of a communication method according to this application;
FIG. 6a is another diagram of a communication method according to this application;
FIG. 6b is another diagram of a communication method according to this application;
FIG. 7a is another diagram of a communication method according to this application;
FIG. 7b is another diagram of a communication method according to this application;

FIG. 8a is another diagram of a communication method according to this application;

FIG. 8b is another diagram of a communication method according to this application;

FIG. 9a is another diagram of a communication method according to this application;

FIG. 9b is another diagram of a communication method according to this application;

FIG. 10 is a diagram of a communication apparatus according to this application;

FIG. 11 is another diagram of a communication apparatus according to this application;

FIG. 12 is another diagram of a communication apparatus according to this application; and

FIG. 13 is another diagram of a communication apparatus according to this application.

## DESCRIPTION OF EMBODIMENTS

The following describes the technical solutions of this application with reference to the accompanying drawings in this application. All other solutions obtained by a person of ordinary skill in the art based on this application without creative efforts shall fall within the protection scope of this application.

Some terms in this application are first described, to facilitate understanding by a person skilled in the art.

(1) Terminal device: The terminal device may be a wireless terminal device that can receive scheduling and indication information from a network device. The wireless terminal device may be a device that provides a user with voice and/or data connectivity, a handheld device with a wireless connection function, or another processing device connected to a wireless modem.

The terminal device may communicate with one or more core networks or the Internet via a radio access network (radio access network, RAN). The terminal device may be a mobile terminal device, for example, a mobile phone (or referred to as a "cellular" phone or a mobile phone (mobile phone)), a computer, or a data card. Alternatively, the terminal device may be a portable mobile apparatus, a pocket-sized mobile apparatus, a handheld mobile apparatus, a computer built-in mobile apparatus, or a vehicle-mounted mobile apparatus, where the mobile apparatus exchanges voice and/or data with the radio access network. Alternatively, the terminal device may be, for example, a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal device), an access terminal device (access terminal device), a user terminal device (user terminal device), a user agent (user agent), a subscriber station (subscriber station, SS), a customer premises equipment (customer premises equipment, CPE), a terminal (terminal), a user equipment (user equipment, UE), a mobile terminal (mobile terminal, MT), or the like. Alternatively, the terminal device may be a wearable device and a terminal device in a next generation communication system, for example, a terminal device in a 6th generation (6th Generation, 6G) communication system or a terminal device in a future evolved public land mobile network (public land mobile network, PLMN).

(2) Network device: The network device may be a device in a wireless network. For example, the network device may be a radio access network (radio access network, RAN) node (or device) that connects the terminal device to the wireless network, and may also be referred to as a base station. Some examples of the RAN device are: a next generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, an uncrewed aerial vehicle, and the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus, for example, a processor, a chip, or a chip system, that can support the network device in implementing the function. The apparatus may be installed in the network device or used in combination with the network device. In the technical solutions provided in this application, an example in which the apparatus configured to implement the function of the network device is the network device is for describing the technical solutions provided in this application.

In this application, an apparatus configured to implement a function of the terminal device may be a terminal device, or may be an apparatus, for example, a processor, a chip, or a chip system, that can support the terminal device in implementing the function. The apparatus may be installed in the terminal device or used in combination with the terminal device. In the technical solutions provided in this application, an example in which the apparatus configured to implement the function of the terminal device is the terminal device is for describing the technical solutions provided in this application.

(3) Configuration and preconfiguration: In this application, the configuration and the preconfiguration are used. The configuration means that the network device sends configuration information of some parameters or values of the parameters to the terminal device by using a message or signaling. The terminal device may determine, based on the values or the information, a parameter for communication or a resource used during transmission. The preconfiguration may mean that the network device pre-negotiates parameter information or a parameter value with the terminal device by using signaling or a message, parameter information or a parameter value used by the network device and/or the terminal device is specified in a standard protocol, or parameter information or a parameter value is pre-stored in the network device or the terminal device. This is not limited in this application.

Further, these values and parameters may be changed or updated.

(4) The terms "system" and "network" in this application may be used interchangeably. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or a new radio vehicle-to-everything (NR vehicle-to-everything, NR V2X) system; may be applied to a system of hybrid networking of a plurality of access technologies (for example, LTE and 5G); may be applied to a device-to-device (device-to-device, D2D) communication system, a machine-to-machine (machine-to-machine, M2M) communication system, internet of things (Internet of Things, IoT), or an uncrewed aerial vehicle communication system; may be applied to a communication system that supports a plurality of wireless technologies, for example, an LTE technology and an NR technology; or may be applied to a non-terrestrial communication system, for example, a satellite communication system or a high-altitude communication platform. In addition, optionally, this application may also be applied to a narrowband-internet of things (narrowband-internet of things, NB-IoT) system, an enhanced data rate for global system for mobile communications (global system for mobile communications, GSM) evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a system to which a future-oriented communication technology is applied, or another communication system.

For example, the communication system includes a network device and a terminal device. The network device serves as a configuration information sending entity, and the terminal device serves as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active (active) state, or may be applied to a terminal device in a non-connected (inactive) state or an idle (idle) state.

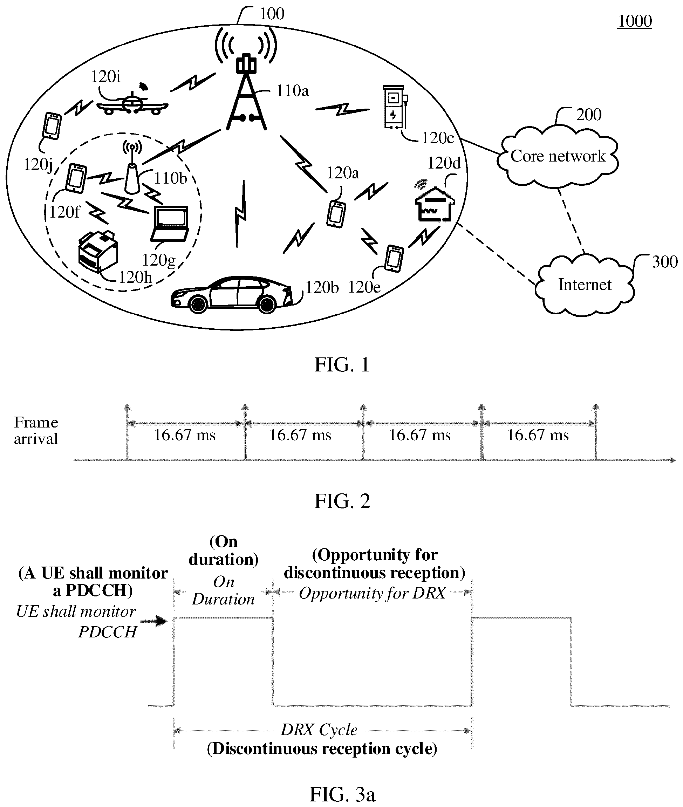

FIG. 1 is a diagram of an architecture of a communication system 1000 to which an embodiment of this application is applied.

As shown in FIG. 1, the communication system includes a radio access network 100 and a core network 200. Optionally, the communication system 1000 may further include the Internet 300. The radio access network 100 may include at least one radio access network device (which may also be understood as a network device described above, for example, 110a and 110b in FIG. 1), and may further include at least one terminal (which may also be understood as a terminal device described above, for example, 120a to 120j in FIG. 1). In addition, the radio access network device may be a macro base station (for example, 110a in FIG. 1), a micro base station or an indoor base station (for example, 110b in FIG.

1), a relay node or a donor node, or the like. It may be understood that all or some functions of the radio access network device in this application may also be implemented by using a software function running on hardware, or may be implemented by using an instantiated virtualization function on a platform (for example, a cloud platform). A specific technology and a specific device form that are used by the radio access network device are not limited in embodiments of this application.

For ease of description, descriptions are provided below by using an example in which a base station serves as the radio access network device, and the terminal device is denoted as a terminal. It may be understood that, when the communication system includes an IAB network, the base station may be an IAB node.

In this application, the base station and the terminal may be fixed or movable. The base station and the terminal may be deployed on land, where the deployment includes indoor or outdoor, or handheld or vehicle-mounted deployment; may be deployed on water; or may be deployed on an airplane, a balloon, and a satellite in air. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station, and for the terminal 120j accessing the radio access network 100 through 120i, the terminal 120i is a base station. However, for the base station 110a, 120i is a terminal. In other words, 110a and 120i communicate with each other according to a wireless air interface protocol. Certainly, communication between 110a and 120i may alternatively be performed according to an interface protocol between base stations. In this case, for 110a, 120i is also a base station. Therefore, both the base station and the terminal may be collectively referred to as a communication apparatus, 110a and 110b in FIG. 1 each may be referred to as a communication apparatus having a function of a base station, and 120a to 120j in FIG. 1 each may be referred to as a communication apparatus having a function of a terminal.

Communication between the base station and the terminal, between base stations, and between terminals may be performed on a licensed spectrum, may be performed on an unlicensed spectrum, or may be performed on both a licensed spectrum and an unlicensed spectrum. To be specific, communication may be performed on a spectrum below 6 gigahertz (gigahertz, GHz), may be performed on a spectrum above 6 GHz, or may be performed on both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station may be a control center in an application scenario of the foregoing terminal, such as a smart grid, industrial control, smart transportation, and a smart city. A function of the terminal may be performed by a module (for example, a chip or a modem) in the terminal, or may be performed by an apparatus including the function of the terminal.

In this application, the base station sends a downlink signal (or downlink information) to the terminal, where the downlink signal (or the downlink information) is carried on a downlink channel. The terminal sends an uplink signal (or uplink information) to the base station, where the uplink signal (or the uplink information) is carried on an uplink channel.

The communication system shown in FIG. 1 is used as an example. A plurality of communication processes may be performed between the terminal device and the network device, to perform transmission of service data. A communication process that may be used in embodiments of this application is described below by using an example.

1. Extended reality (eXtended Reality, XR)

In recent years, with continuous development of a 5th generation (5G) communication system, a data transmission delay is continuously reduced, and a transmission capacity is increasingly large. Some multimedia services with strong real-time performance and a high data capacity requirement, such as video transmission, cloud gaming (cloud gaming, CG), and extended reality (extended reality, XR), gradually penetrate into the 5G communication system, where XR includes virtual reality (virtual reality, VR), augmented reality (augmented reality, AR), and the like.

With rapid increase of a communication transmission rate, a real-time video transmission service gradually becomes one of core services in a current network. With continuous progress and improvement of extended reality technologies, related industries have developed vigorously. For example, as a kind of XR, a VR technology has entered various fields closely related to people's production and life, such as education, entertainment, military, medical care, environmental protection, transportation, and public health. Compared with a conventional video service, VR has advantages such as multiple viewing angles and strong interactivity, and provides brand-new visual experience for a user. In VR, a plurality of technologies such as computer graphics and multimedia are integrated, to simulate functions of human sensory organs such as visual, auditory, and tactile senses. In this way, people immerse in a virtual world generated by a computer, feeling as if they are there, and perform real-time communication by using a language, a gesture, and the like. This enhances immersion. By using the VR technology, people feel reality of the real world, and can further break through restrictions such as time and space, to have wonderful experience of entering the virtual world. In AR, by using a computer technology, virtual information is superimposed to the real world, is displayed through devices such as a mobile phone, a tablet computer, and glasses, and is perceived by people. In this way, to achieve integration of the real world and the virtual world, and enrich the real world. In short, more information is given to a real object, to enhance a stereoscopic sense, and enhance a visual effect and interactive experience.

In addition to smartphones, people increasingly expect to improve XR experience through the terminal device such as a head mounted display (head mounted display, HMD) or smart glasses (such as VR glasses and AR glasses). In an interactive game such as an outdoor multiplayer battle game, XR and cloud gaming traffic has requirements on a high throughput, a low delay, and high reliability. This brings challenges to a capacity for an XR service on a 5G NR network. In addition, many XR and cloud gaming devices are expected to be mobile and small-scale, and therefore, battery power resources of the device are limited. For long-time cloud gaming experience, power consumption and a battery life of the device also need to be significantly considered. Therefore, as the XR device becomes increasingly lightweight, on a basis of ensuring user experience, power consumption of the device and a device capacity for a service on the 5G NR network have become key issues in current research on an XR service.

In an implementation example, service models of an XR transmission service and the video transmission service usually arrive periodically based on a frame rate. FIG. 2 is used as an example. For a video with a frame rate of 60 frames per second (frame per second, FPS), ideally, one picture frame arrives every 16.67 milliseconds. For the XR transmission service and the video transmission service, generation and arrival of data packets are not continuous. From a perspective of the delay, the terminal device monitors downlink control signaling from the network device in each slot. This is beneficial to receiving an uplink grant or downlink data, but also causes power consumption of the UE.

In an implementation example, a data amount of the XR transmission service and a data amount of the video transmission service are usually large. For example, a size of a 4K video frame is about 30 to 100 kilobits (KB). In addition, sizes of video frames usually change. Because compression rates and frame types of the video frames are different, the sizes of the video frames change greatly. Different XR services have different uplink and downlink service models. For example, a change in scene content display in VR is caused by a posture or a location (an action). Location and posture information are mainly uploaded in VR, and a data amount is small and is usually only dozens of kilobits per second (Kbps). Downlink transmission is mainly for a rendered video stream, and a data amount is large and may reach dozens to hundreds of megabits per second (Mbps). Different from that in VR, a change in scene content display in AR is caused by a change in a fixation focus target and a change in a spatial relationship (action) between a location and a fixation point. Visual information (including a depth) required for perception is uploaded in AR. Therefore, uplink transmission is mainly for a clear and stable picture or video stream with a large data amount, or may be for some extracted environment feature information. According to industry research and evaluation, for an interactive AR service, a network uplink rate is required to be about 2 Mbps to meet initial experience, and the network uplink rate is required to range from 10 Mbps to 20 Mbps to meet advanced experience. Compared with Cloud VR, Cloud AR has a higher requirement on an uplink transmission rate and is more challenging in uplink transmission.

2. Discontinuous reception (discontinuous reception, DRX) technology

To reduce power consumption of the terminal device, when data transmission is not performed, receiving of a physical downlink control channel (physical downlink control channel, PDCCH) may be stopped (where in this case, the terminal device stops PDCCH blind detection), to reduce the power consumption, so as to prolong a battery life. Therefore, in the 5G NR standard, a discontinuous reception (discontinuous reception, DRX) technology is introduced for power saving (Power Saving).

Optionally, for the terminal device in a connected state, if DRX is configured for the terminal device, it may be considered that connected discontinuous reception (connected discontinuous reception, CDRX) is configured for the terminal device.

For example, as shown in FIG. 3a, a basic mechanism of DRX is to configure a DRX cycle (DRX cycle) for the terminal device. In on duration (On Duration), the terminal device shall monitor the PDCCH (UE shall monitor PDCCH). In another time period (for example, an opportunity for DRX (opportunity for DRX) shown in the figure), the terminal device may enter a sleep state, and does not receive the PDCCH, to reduce the power consumption. It should be noted that the terminal device in sleep duration only does not receive the PDCCH, but may receive data from another physical channel such as a physical downlink shared channel (physical downlink shared channel, PDSCH), an acknowledgment (acknowledgement, ACK) signal, and the like. For example, in semi-persistent scheduling (semi-persistent scheduling, SPS), the terminal device in the sleep duration may receive PDSCH data sent in a periodically configured downlink subframe.

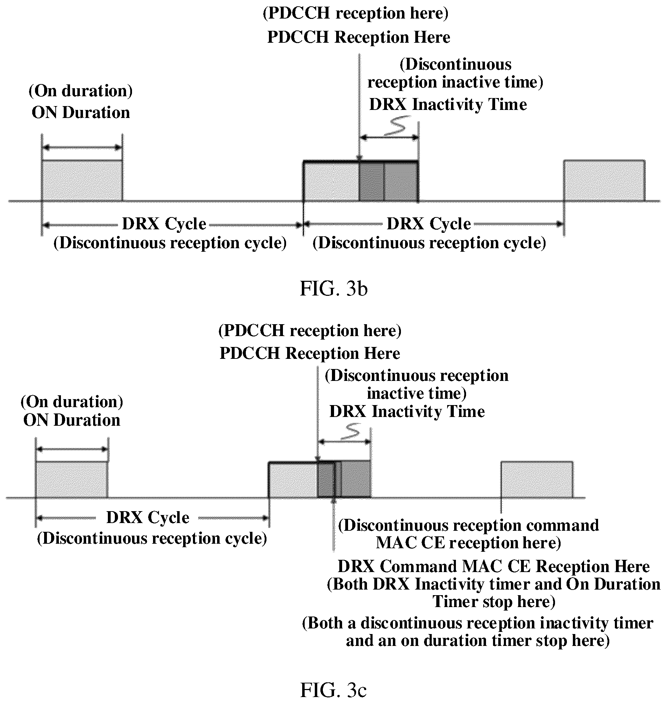

In addition, in most cases, after a terminal device is scheduled in one slot and receives or sends data, the terminal device is very likely to be scheduled again in next several slots. If the terminal device waits for a next DRX cycle to receive or send the data, an additional delay is caused. For example, as shown in FIG. 3b, to reduce such a delay, in a DRX cycle, after the terminal device is scheduled in "PDCCH reception here (PDCCH Reception Here)" in the figure, activation duration is configured, and the terminal device starts a DRX inactivity timer (DRX Inactivity Timer). The terminal device continuously monitors the PDCCH in a time period (or referred to as activation duration) indicated by the timer until the DRX inactivity timer expires. If the terminal device has newly transmitted data to be scheduled, the timer is restarted once.

In addition, to prevent the terminal device from failing to enter the sleep state in time because an on duration timer and the DRX inactivity timer are set to be excessively long, the network device (for example, a base station) may send a DRX command to the terminal device through a medium access control (medium access control, MAC) control element (control element, CE); and after receiving the DRX command MAC CE, the terminal device stops the on duration timer and the DRX inactivity timer, and immediately enters sleep duration. For example, FIG. 3c is used as an example. After being scheduled in "PDCCH reception here" in a specific DRX cycle, the terminal device starts a DRX inactivity timer. Within duration of the DRX inactivity timer, the terminal device may receive a MAC CE and enter sleep duration based on an indication of the MAC CE. In FIG. 3c, a time domain position corresponding to the MAC CE is "DRX command MAC CE reception here (Both a DRX inactivity timer and an on duration timer stop here) (DRX Command MAC CE Reception Here (Both DRX Inactivity Timer and On Duration Timer Here))".

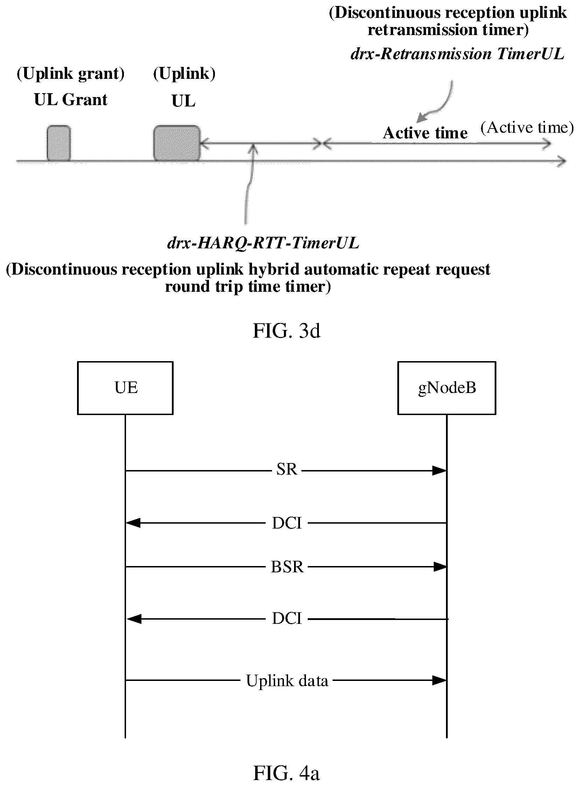

For example, as shown in FIG. 3d, for uplink transmission (for example, an uplink (UL) PUSCH transmission process after an uplink grant (UL Grant) is obtained in the figure), because the terminal device does not know whether a sent data packet is correctly received by the network device (for example, a base station), after sending a physical uplink shared channel (physical uplink shared channel, PUSCH), the terminal device starts a discontinuous reception uplink hybrid automatic repeat request round trip time timer (drx-HARQ-RTT-TimerUL) for a time period. When the timer expires, the terminal device starts a discontinuous reception uplink retransmission timer (drx-RetransmissionTimerUL) and is in a wake-up state (or referred to as being in active time (Active Time)), so that when the network device does not successfully receive/parse the PUSCH, the terminal device receives retransmission scheduling within duration of the timer, and after the drx-RetransmissionTimerUL expires, the terminal device enters sleep duration.

3. Uplink scheduling

Uplink configured scheduling (configured scheduling, CS) or a configured grant (configured grant, CG) is suitable for uplink periodic service transmission. The CG means that, in an uplink transmission process, an uplink scheduling resource needs to be allocated only once by using radio resource control (radio resource control, RRC) signaling or through a PDCCH, and then a same time-frequency resource may be periodically reused for uplink transmission.

There are two types of CGs. By using a CG of Type 1 (Type 1), related parameters for CG transmission, for example, a CG periodicity, and a time domain resource and a frequency domain resource of the CG, are configured by using RRC, and a corresponding CG resource is activated by using the RRC signaling. By using a CG of Type 2 (Type 2), a related parameter for CG transmission, for example, a CG periodicity, is configured by using RRC, and a corresponding CG resource is configured and activated through the PDCCH.

Optionally, a procedure for scheduling the CG of Type 1 includes the following steps:

(1) The network device (for example, a base station) configures related parameters of a CG resource by using the RRC signaling, including a periodicity, a time domain resource and a frequency domain resource of the CG, and the like. Parameters of a plurality of CG resources (for example, CG resources corresponding to different periodicities) may be included. In addition, the network device (for example, the base station) activates a corresponding CG resource by using the RRC signaling.
(2) A MAC entity determines, based on a CG configuration, a slot or symbol in which the CG resource periodically takes effect, and performs transmission of uplink data in the slot or symbol in which the CG resource periodically takes effect, namely, a PUSCH.
(3) After service transmission is completed, the network device (for example, the base station) delivers downlink control information (downlink control information, DCI), deactivates the CG configuration, and releases the CG resource.

Optionally, a procedure for scheduling the CG of Type 2 includes the following steps:

(1) The network device (for example, a base station) configures related parameters of a CG resource by using the RRC signaling, including a periodicity, and the like. Parameters of a plurality of CG resources (for example, CG resources corresponding to different periodicities) may be included.
(2) The network device (for example, the base station) performs transmission by using a CG activated through the PDCCH, and indicates, by using a resource allocation field, a time domain resource and a frequency domain resource specifically allocated for CG transmission.
(3) A MAC entity determines, based on a CG configuration, a slot or symbol in which the CG resource periodically takes effect, and performs transmission of uplink data in the slot or symbol in which the CG resource periodically takes effect.

(4) After service transmission is completed, the network device (for example, the base station) delivers DCI, deactivates the CG configuration, and releases the CG resource.

In addition, for a service whose transmission is performed by using the CG, the time domain resource, the frequency domain resource, and the like of the CG are preconfigured. If excessive resources are configured, although transmission of all data may be performed by using the CG, and a delay is low, a waste of resources is caused. Therefore, to avoid a waste of resources, after data is sent on the preconfigured resources, there is still remaining data to be sent, and the remaining data may be sent by using a dynamic grant (dynamic grant, DG).

For example, a procedure in which the data is sent by using the DG may be implemented in a manner shown in FIG. 4a. As shown in FIG. 4a, the terminal device (for example, the terminal device is a UE in the figure) notifies, by using a scheduling request (scheduling request, SR) carried on a physical uplink control channel (physical uplink control channel, PUCCH) or a physical random access channel (physical random access channel, PRACH), the network device (for example, the network device is a gNodeB in the figure) whether an uplink resource is required for transmission of uplink data. Correspondingly, the gNodeB may send, to the terminal device based on the SR, DCI carried on a PDCCH, to indicate that uplink transmission is allowed. After receiving the DCI, the UE may send a buffer status report (buffer status report, BSR) carried on a PUSCH to the gNodeB, and notify, by using the BSR, an amount of uplink resources required by the UE. Then, the gNodeB may send, to the UE based on the BSR, the DCI carried on the PDCCH, to indicate an allocated uplink resource (where optionally, an amount of allocated uplink resources depends on an implementation of the network device (for example, the base station), and a common practice is to allocate at least sufficient resources for the terminal device to send the BSR). Subsequently, the terminal device may perform transmission of the uplink data based on the DCI.

Optionally, in a process in which the UE receives the DCI and then sends the BSR based on the DCI, the UE may notify the gNodeB of power headroom report (power headroom report, PHR) information, to notify the gNodeB of current power headroom. Optionally, in the process in which the UE receives the DCI and then sends the BSR based on the DCI, the UE may further send a part of the uplink data (denoted as data, buffer status report>0, and a PHR (DATA&BSR>0&PHR) in the figure). An amount of the sent uplink data is preconfigured in a standard/protocol. Because the gNodeB does not determine, based on the SR, an amount of uplink data that needs to be sent by the UE, the amount of the uplink data is generally set to a small fixed value, to help quickly schedule transmission of the uplink data.

In an implementation example, the UE may carry an index (Index) in the BSR in a manner shown in Table 1, and indicate, by using the index, the amount of uplink resources required by the UE, where a "BS value" represents a buffer size value (Buffer Size value).

Table 1

| Index | BS value | Index | BS value | Index | BS value | Index | BS value |
|---|---|---|---|---|---|---|---|
| 0 | 0 | 8 | ≤102 | 16 | ≤1446 | 24 | ≤20516 |
| 1 | ≤10 | 9 | ≤142 | 17 | ≤2014 | 25 | ≤28581 |
| 2 | ≤14 | 10 | ≤198 | 18 | ≤2806 | 26 | ≤39818 |
| 3 | ≤20 | 11 | ≤276 | 19 | ≤3909 | 27 | ≤55474 |
| 4 | ≤28 | 12 | ≤384 | 20 | ≤5446 | 28 | ≤77284 |
| 5 | ≤38 | 13 | ≤535 | 21 | ≤7587 | 29 | ≤107669 |
| 6 | ≤53 | 14 | ≤745 | 22 | ≤10570 | 30 | ≤150000 |
| 7 | ≤74 | 15 | ≤1038 | 23 | ≤14726 | 31 | >150000 |

It can be learned from the foregoing implementation process that the terminal device may send a scheduling request (scheduling request, SR) to the network device, to indicate, by using the SR, that the terminal device requires an uplink resource. After the terminal device receives an indication that is from the network device and that is in response to the SR, the terminal device sends a buffer status report (buffer status report, BSR) to the network device, to indicate, by using the BSR, an amount of uplink resources required by the terminal device. Then, the terminal device can send uplink data to the network device only after receiving an indication that is from the network device and that is in response to the BSR.

In an implementation example, in a service scenario in which scheduling is performed by using the CG, if all current CG resources are used to send the uplink data, but there is still remaining data whose transmission is to be performed, transmission of the remaining data may be performed by using the DG. When data transmission is performed by using the dynamic grant, the terminal device notifies, by using the SR, the network device (for example, the base station) whether an uplink resource is required for transmission of the uplink data. However, in this case, the network device (for example, the base station) does not know an amount of data that needs to be sent by the terminal device, and therefore, the network device needs to wait for the terminal device to send the BSR to notify the network device (for example, the base station) that the terminal device needs to send data.

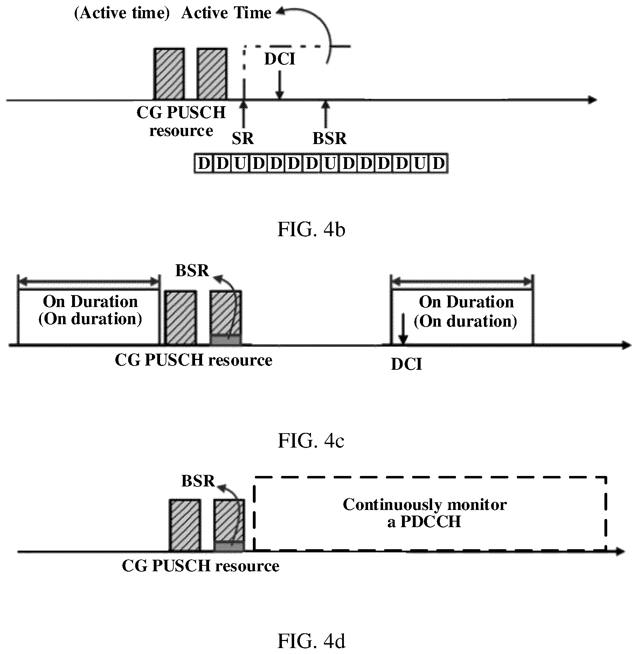

In a possible implementation, an example in which the terminal device performs communication in a time division duplex (time division duplex, TDD) manner is used. As shown in FIG. 4b, a configuration of a "downlink slot (downlink slot, D-slot, D for short)" and a "downlink slot (uplink slot, U-slot, U for short)"are variable. For example, a slot configuration is "DDUDD DDUDD". After the terminal device completes transmission on a PUSCH resource by using the CG after the "on duration", if the DG is used for transmission, the terminal device needs to wait until the terminal device is in a wake-up state to monitor the DCI. Sending of the SR and sending of the BSR each requires an uplink slot, that is, the SR and the BSR each are sent in a "U-slot". After the "U-slot" for sending the SR, four "D-slots" need to be waited before a next "U-slot". After the SR is sent, when CDRX is configured, the SR triggers the terminal device to enter the "wake-up" state, and monitor the PDCCH. After sending the DCI to the terminal device, the network device (for example, the base station) can send the BSR only after four "D-slots" at the earliest since the SR is sent, and can send data only after another four "D-slots" at the earliest. As a result, undoubtedly, a transmission delay of a data packet is significantly increased. A delay of an uplink service is limited. As a result, an uplink capacity is further limited because the BSR is sent after the SR is reported.

In another possible implementation, when DRX is configured for the terminal device, as shown in FIG. 4c, after sending a BSR (for example, the BSR is a BSR configured periodically) based on the CG resource, the terminal device needs to wait for a next CG periodicity (namely, "On Duration") to receive DCI, and determines a DG resource based on an indication of the DCI. This may cause a significant increase in a delay in obtaining by the terminal device.

In another possible implementation, when DRX is not configured for the terminal device, as shown in FIG. 4d, after the terminal device sends a BSR based on the CG resource (for example, the BSR is a BSR periodically configured), because the terminal device does not determine whether the network device responds to the BSR and does not determine when the network device delivers a scheduling indication based on the BSR, the terminal device needs to continuously monitor the PDCCH to determine a DG resource. This may cause an increase in a delay in obtaining by the terminal device, and increase power consumption of the terminal device accordingly.

In conclusion, how to reduce a communication delay to improve communication efficiency is a technical problem to be urgently resolved.

To resolve the foregoing problem, this application provides a communication method and a related device, to reduce the communication delay, so as to improve the communication efficiency. Detailed descriptions are provided below with reference to the accompanying drawings.

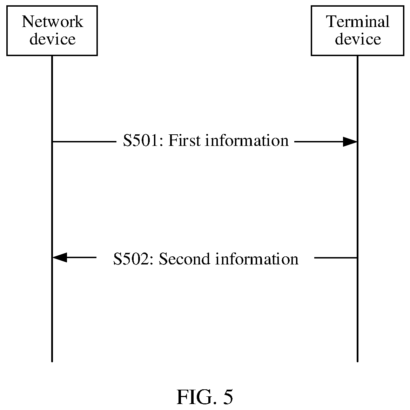

FIG. 5 is a diagram of a communication method according to this application. The method includes the following steps.

S501: A terminal device sends first information, and correspondingly, a network device receives the first information in step S501.

S502: The network device sends second information, and correspondingly, the terminal device receives the second information in step S502.

For the terminal device, in step S501, the terminal device starts a first timer after sending the first information, where the first information is used to request an uplink resource, and the first timer indicates a time window for monitoring a physical downlink control channel (physical downlink control channel, PDCCH). In step S502, the terminal device receives the second information on the PDCCH before the first timer expires, where the second information indicates the uplink resource.

For the network device, in step S501, the network device starts the first timer after receiving the first information; and in step S502, the network device sends the second information on the PDCCH before the first timer expires.

Optionally, in step S501, the uplink resource requested by using the first information sent by the terminal device may be referred to as a grant resource, a dynamic grant (dynamic grant, DG) resource, or another name. This is not limited herein.

In a possible implementation, the first information is carried in an $N^{th}$ time unit in N time units included in a configured grant (configured grant, CG) resource, where N is a positive integer greater than 1. Specifically, a time domain resource used to carry the first information is included in the CG resource, and the time domain resource is specifically the $N^{th}$ time unit in the N time units included in the CG resource, so that both the terminal device and the network device can determine to perform transmission of the first information in the $N^{th}$ time unit, to reduce implementation complexity.

Optionally, the $N^{th}$ time unit in the N time units included in the CG resource may be expressed as a last time unit in the N time units included in the CG resource, a last time unit in the CG resource, or another expression. This is not limited herein.

Optionally, the time unit in this application may include an orthogonal frequency division multiplexing (orthogonal frequency division multiplexing, OFDM) symbol, a frame, a subframe, a slot, or the like.

In a possible implementation, the first information is carried in a $k^{th}$ time unit in N time units included in a CG resource, where N is a positive integer greater than 1, and k is a positive integer less than N. Specifically, a time domain resource used to carry the first information is included in the CG resource, and the time domain resource is specifically the $k^{th}$ time unit in the N time units included in the CG resource, so that both the terminal device and the network device can determine to perform transmission of the first information in a time unit other than an $N^{th}$ time unit, to reduce implementation complexity and improve solution implementation flexibility.

Optionally, the $k^{th}$ time unit in the N time units included in the CG resource may be expressed as a non-last time unit in the N time units included in the CG resource, a non-last time unit in the CG resource, or another expression. This is not limited herein.

In addition, in the implementation processes shown in FIG. 4b and FIG. 4c, the terminal device may send the BSR in any time unit included in the CG resource. In this case, the network device needs to perform parsing and identification in all the time units included in the CG resource, to determine the BSR. However, in the foregoing technical solution, both the terminal device and the network device determine to perform transmission of the first information in the $N^{th}$ time unit (or the $k^{th}$ time unit), so that the terminal device and the network device can determine a time unit for carrying the first information, to reduce complexity and overheads.

In a possible implementation, the first timer started by the terminal device or the network device includes any one of the following: a discontinuous reception (discontinuous reception, DRX) inactivity timer (Inactivity Timer); an activity timer (Activity Timer) of a DG resource; a DRX uplink retransmission timer (drx-RetransmissionTimerUL); or a time window length indicated by a monitoring slot periodicity and offset (monitoringSlotPeriodicityAndOffset). Specifically, when the first timer includes the DRX inactivity timer, the DRX uplink retransmission timer, or the time window length indicated by the monitoring slot periodicity and offset, the first timer may share implementations of these timers, to reduce overheads. When the first timer includes the activity timer of the DG resource, the first timer may not depend on an implementation of another timer, so that flexibility of configuring the first timer can be improved.

In a possible implementation, in the foregoing implementation process, a process in which the terminal device starts the first timer after sending the first information in step S501 includes: The terminal device starts a second timer after sending the first information, and starts the first timer when the second timer expires, where the second timer indicates waiting time. Specifically, after sending the first information, the terminal device may start the first timer after the waiting time, to reserve sufficient time for transmission/processing of the first information.

Optionally, the waiting time may be understood as time for which the terminal device waits to start the first timer. For example, the waiting time may include at least either of time for transmission of the first information or time for processing the first information by a receiver of the first information (namely, the network device).

Optionally, the second timer includes any one of the following: a drx-HARQ-RTT-TimerUL; a HARQ-RTT timer of the DG resource; or a monitoring waiting time (monitoringwaitingtime) timer. Specifically, when the second timer includes the DRX HARQ-RTT timer or the monitoring waiting time timer, the second timer may share implementations of these timers, to reduce overheads. When the first timer includes the HARQ-RTT timer of the DG resource, the second timer may not depend on an implementation of another timer, so that flexibility of configuring the second timer can be improved.

In a possible implementation, the first information sent by the terminal device in step S501 is used to request an uplink resource corresponding to first data. Correspondingly, a process in which the terminal device sends the first information in step S501 includes: The terminal device sends the first information when an amount of the first data is greater than 0. Specifically, for the terminal device, the uplink resource requested by using the first information is used for transmission of the first data, that is, the first data is to-be-sent uplink data. Therefore, the terminal device sends, only when determining that the first data is greater than 0, the first information used to request the uplink resource, so that unnecessary overheads can be avoided.

Optionally, the amount of the first data is determined based on a difference between a total data amount and a transmitted data amount.

Optionally, the first information and a part or all of transmitted data are located on a same resource (for example, the CG resource).

Optionally, the total data amount may be determined based on an obtained resource amount. For example, the total data amount is equal to the obtained resource amount. For another example, the total data amount is a difference between the obtained resource amount and a predetermined threshold.

Specifically, for the terminal device, the amount of the to-be-sent first data may be determined based on the difference between the total data amount and the transmitted data amount. Therefore, the foregoing technical solution can be applied to a scenario in which data transmission is performed based on an obtained resource (for example, the CG resource) and there is still remaining data to-be-sent, so that the terminal device can quickly obtain the uplink resource in the scenario, and the communication delay is reduced.

In a possible implementation, the transmitted data amount includes any one of the following: an amount of data allowed to be transmitted on the CG resource within preset duration; an amount of data allowed to be transmitted on the CG resource within duration indicated by a packet delay budget (packet delay budget, PDB); or an amount of data allowed to be transmitted in one or more CG transmission opportunities in the CG resource. Specifically, the transmitted data amount used to determine the amount of the first data may be determined based on any one of the foregoing items, to improve the solution implementation flexibility.

In a possible implementation, the first information sent by the terminal device in step S501 includes at least either of the following: first indication information, indicating that the first data is not empty; or second indication information, indicating the amount of the first data. Specifically, the first information indicating the uplink resource may include at least either of the information, to improve the solution implementation flexibility.

In a possible implementation, the first information sent by the terminal device in step S501 is carried in a buffer status report (buffer status report, BSR); the first information is carried in uplink control information (uplink control information, UCI); or the first information is carried in a BSR and UCI. Specifically, the first information indicating the uplink resource may be carried in at least one of the foregoing items, to improve the solution implementation flexibility.

According to the technical solution shown in FIG. 5 and the related embodiment, after sending, in step S501, the first information used to request the uplink resource, in step S502, the terminal device receives, on the PDCCH before the first timer expires, the second information indicating the uplink resource, and sends uplink data based on the uplink resource, where the first timer indicates the time window for monitoring the PDCCH. In other words, the terminal device monitors the PDCCH in the time window indicated by the first timer, and may subsequently send the uplink data based on the second information that is detected on the PDCCH and that indicates the uplink resource. Therefore, compared with an implementation in which an uplink resource grant can be obtained only by using a plurality of interaction processes corresponding to an SR and a BSR, in the foregoing solution, an uplink resource determining process can be implemented through exchange of the first information and the second information between the terminal device and the network device, so that the communication delay can be reduced, to improve communication efficiency.

In some implementation examples, the implementation process shown in FIG. 5 is described by using examples with reference to more accompanying drawings.

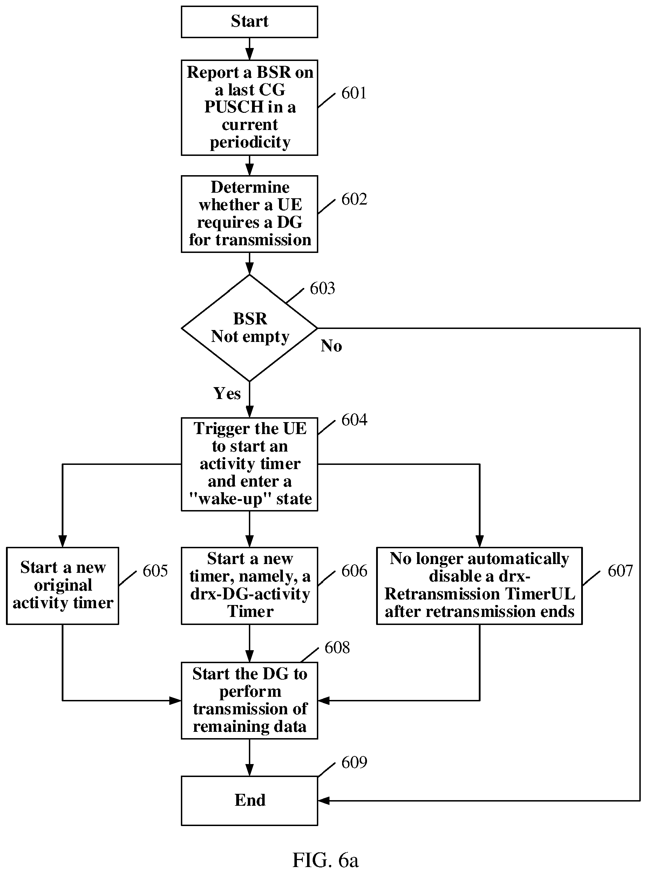

In Embodiment 1, when DRX (or CDRX) is configured for the terminal device, the terminal device and the network device may perform a process described in FIG. 6a. In an implementation process shown in FIG. 6a, for example, the first information is carried in the last time unit in the N time units included in the CG resource.

601: The terminal device reports a BSR (that is, the first information includes the BSR) on a last CG PUSCH in a current CG periodicity. In other words, the terminal device notifies, by using the BSR, the network device whether there is data whose transmission is to be performed.

It should be noted that a process in which the terminal device sends the BSR in step 601 is an implementation example of step S501. For an implementation process of step 601, refer to the implementation process of step S501, and corresponding technical effects are achieved. Details are not described herein again.

Optionally, in an uplink scenario in which the BSR is used to notify the network device that data whose uplink transmission is to be performed may be an XR service, there is still remaining data (or referred to as to-be-sent data) after the data is sent on the CG resource in the current periodicity.

602: The network device determines whether a UE (namely, the terminal device) requires a DG for transmission. In step 602, a process performed by the network device may include steps 603, 604, and 609, to perform the determining process.

603: The network device determines whether the BSR indicates "not empty (Not empty)", and performs step 604 when determining that the BSR indicates "not empty", or performs step 609 when determining that the BSR does not indicate "not empty".

604: When determining that the BSR indicates "not empty" in step 603, the network device triggers (determines) the UE to start active time (Activity Timer), and performs any one of step 605 to step 607.

605: After step 604, the network device starts a new original activity timer. Correspondingly, after sending the BSR in step 601, the terminal device starts the new original activity timer. In other words, the network device and the terminal device use the original activity timer as the first timer.

Optionally, in step 605, before receiving the BSR and starting the first timer, the network device may start the second timer, and start the first timer when the second timer expires. Correspondingly, before sending the BSR and starting the first timer, the terminal device may start the second timer, and start the first timer when the second timer expires. The second timer may reuse the discontinuous reception uplink hybrid automatic repeat request round trip time timer, namely, the drx-HARQ-RTT-TimerUL.

606: After step 604, the network device starts a new timer (Timer), namely, a drx-DG-activityTimer. Correspondingly, after sending the BSR in step 601, the terminal device starts the drx-DG-activityTimer. In other words, the network device and the terminal device use the drx-DG-activityTimer as the first timer.

Optionally, in step 606, before receiving the BSR and starting the first timer, the network device may start the second timer, and start the first timer when the second timer expires. Correspondingly, before sending the BSR and starting the first timer, the terminal device may start the second timer, and start the first timer when the second timer expires. For example, in step 606, both the first timer and the second timer may be configured in DRX-configuration information (DRX-Config) in RRC signaling. The first timer may be represented as a drx-DG-activityTimer field, and the second timer may be represented as a drx-DG-RTT-TimerUL field.

607: After step 604, the network device no longer automatically disables the drx-RetransmissionTimerUL after retransmission ends (or no longer automatically disables a drx-RetransmissionTimerUL of a specific CG after retransmission ends). Correspondingly, after sending the BSR in step 601, the terminal device starts the drx-RetransmissionTimerUL. In other words, the network device and the terminal device use the drx-RetransmissionTimerUL as the first timer.

Optionally, in step 607, before receiving the BSR and starting the first timer, the network device may start the second timer, and start the first timer when the second timer expires. Correspondingly, before sending the BSR and starting the first timer, the terminal device may start the second timer, and start the first timer when the second timer expires. The second timer may reuse the discontinuous reception uplink hybrid automatic repeat request round trip time timer, namely, the drx-HARQ-RTT-TimerUL.

608: After any one of step 605 to step 607, start the DG to perform transmission of the remaining data. In step 608, the network device sends the second information (namely, DCI corresponding to the BSR) within duration corresponding to the first timer started in any one of step 605 to step 607; and the terminal device monitor the PDCCH within the duration corresponding to the first timer started in any one of step 605 to step 607, to receive the second information (namely, the DCI corresponding to the BSR).

609: End the procedure.

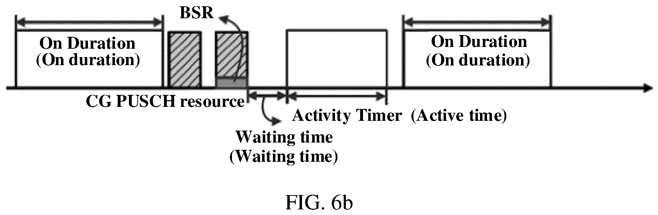

The technical solution shown in FIG. 6a may be implemented in a process shown in FIG. 6b. As shown in FIG. 6b, when CDRX is configured for the terminal device, after sending a BSR on a last CG PUSCH resource of CG PUSCH resources after specific "on duration", the terminal device may start the second timer (where duration corresponding to the second timer is denoted as waiting time in the figure), and start the first timer (denoted as an activity timer in the figure) after the second timer expires.

In Embodiment 2, when DRX (or CDRX) is configured for the terminal device, the terminal device and the network device may perform a process described in FIG. 6a. In an implementation process shown in FIG. 6a, for example, the first information is carried in the non-last time unit in the N time units included in the CG resource.

701: The terminal device reports a BSR (that is, the first information includes the BSR) on a non-last CG PUSCH in a current periodicity. In other words, the terminal device notifies, by using the BSR, the network device whether there is data whose transmission is to be performed.

702: The network device determines whether a UE (namely, the terminal device) requires a DG for transmission. In step 702, a process performed by the network device may include steps 703, 704, and 705, to perform the determining process.

Optionally, the terminal device (or the network device) may start an amount of the remaining data of the terminal device in the following manner:

$$\text{Remaining Data} = \text{Total Data} - \text{Transmission Data}.$$

"Remaining Data" represents the amount of the remaining data, "Total Data" represents a total transmission data amount, and "Transmission Data" represents a transmitted data amount.

It can be learned from the foregoing formula that the terminal device (or the network device) may subtract the transmitted data amount Transmission Data from the total transmission data amount Total Data to obtain the amount of the remaining data. For Transmission Data, this application provides the following three optional manners.

Manner 1: An amount of data whose transmission is allowed on a CG PUSCH included in a time period T.

Manner 2: Particularly, in Manner 1, when T=PDB, Opt1 is equivalent to an amount of data whose transmission is allowed on a CG PUSCH that meets a PDB delay requirement.

Manner 3: For a case in which one CG periodicity has a plurality of CG occasions, Transmission Data is defined as an amount of data whose transmission is allowed in the CG periodicity.

Optionally, when the terminal device determines, in any one of Manner 1 to Manner 3, that the amount of the remaining data is greater than 0, the terminal device is triggered to perform step 701.

703: If the amount of the remaining data calculated by the base station (namely, the network device) is greater than 0 (for example, may be denoted as "Remaining Data≠0"), perform step 706; or if the amount of the remaining data calculated by the base station (namely, the network device) is equal to 0, perform step 710. In other words, after the BSR is reported, the terminal device and the network device need to configure any one of Manner 1 to Manner 3 and a same manner for defining Transmission Data. Through calculation, the network device calculates whether the amount of the remaining data is equal to 0 to determine whether the terminal device requires the DG for transmission. If Remaining Data≠0, it indicates that the terminal device requires the DG for transmission.

704: The terminal device reports an accurate value of Remaining Data, where Remaining Data≠0. In other words, the terminal device may perform step 706 when determining, based on the BSR, that the value of Remaining Data is not equal to 0, or perform step 710 when determining, based on the BSR, that the value of Remaining Data is equal to 0. In other words, the terminal device reports the accurate value of Remaining Data based on the BSR sent in step 701, and if the reported value is not 0, it indicates that there is remaining data, and the DG is required for data transmission.

705: After the terminal device reports the BSR, based on whether a CG-UCI indication is 1, the terminal device performs step 706 when the CG-UCI indication is "1", indicating that data remains (or indicates that there is remaining data); or the network device performs step 710 when the CG-UCI indication is "0", indicating that no data remains (or indicates that there is no remaining data). In other words, after reporting the BSR in step 701, the terminal device indicates, by using the CG-UCI, whether the terminal device still needs to perform transmission of data. In other words, the network device may determine, based on whether the CG-UCI indication is 1, whether there is data whose transmission needs to be performed by using the DG.

Optionally, a new field Remaining data is added to a format of the CG-UCI to indicate whether the terminal device has remaining data in the current periodicity. The field may need only 1 bit, where 1 indicates that there is remaining data, and 0 indicates that there is no remaining data. Implementation of a row in which the "remaining data (Remaining data)"is located is shown in Table 2 below.

Table 2

| Field (Field) | Bitwidth (Bitwidth) |
|---|---|
| HARQ process number (HARQ process number) | 4 |
| Redundancy version (Redundancy version) | 2 |
| New data indicator (New data indicator) | 1 |
| ... | ... |
| Remaining data (Remaining data) | 1 |

706: When determining that Remaining Data≠0 in any one of step 703 to step 705, the network device triggers (determines) the UE to start active time (Activity Timer), and performs either step 707 or step 708.

707: After step 706, the network device starts a new original activity timer. Correspondingly, after sending the BSR in step 701, the terminal device starts the new original activity timer. In other words, the network device and the terminal device use the original activity timer as the first timer.

708: After step 706, the network device starts a new timer (Timer), namely, a drx-DG-activityTimer. Correspondingly, after sending the BSR in step 701, the terminal device starts the drx-DG-activityTimer. In other words, the network device and the terminal device use the drx-DG-activityTimer as the first timer.

It should be noted that, for implementation processes of step 707 and step 708, refer to the foregoing implementation processes of step 604 and step 605. Details are not described herein again.

709: After either of step 707 and step 708, start the DG to perform transmission of the remaining data. In step 608, the network device sends the second information (namely, DCI corresponding to the BSR) within duration corresponding to the first timer started in either of step 707 and step 708; and the terminal device monitor the PDCCH within the duration corresponding to the first timer started in either of step 707 and step 708, to receive the second information (namely, the DCI corresponding to the BSR).

710: End the procedure.

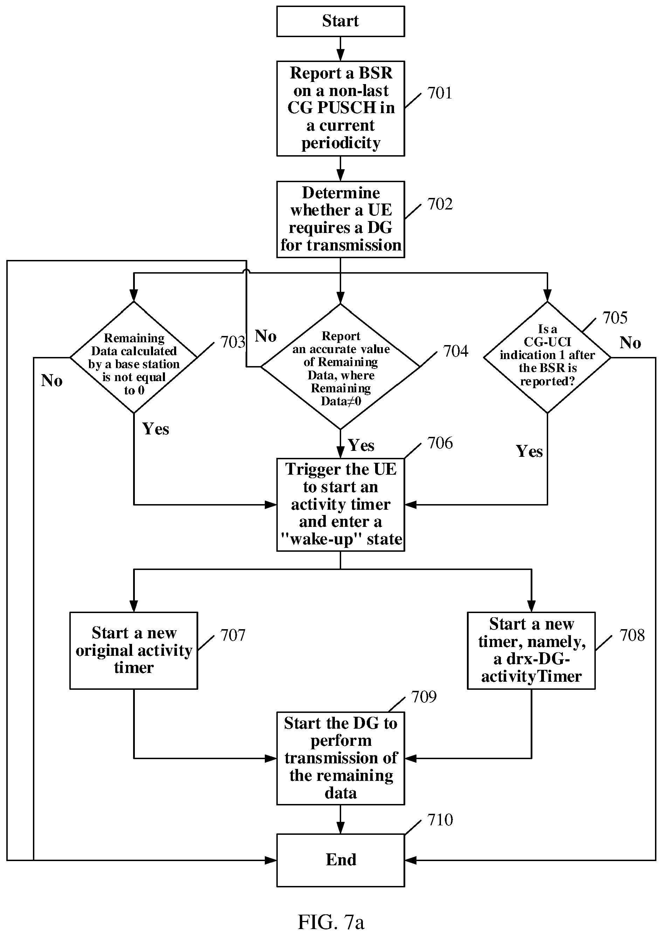

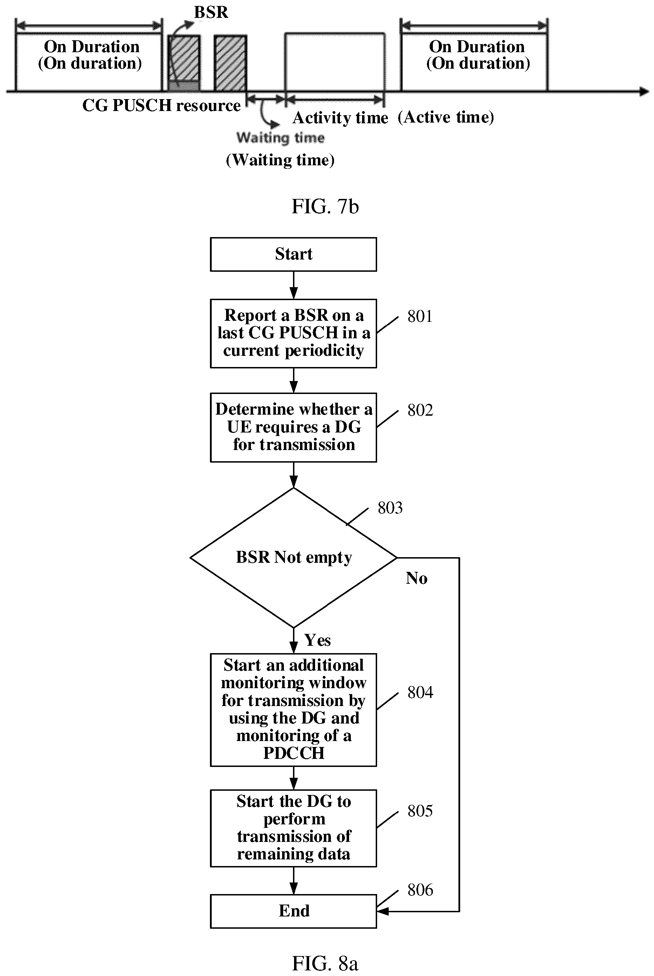

The technical solution shown in FIG. 7a may be implemented in a process shown in FIG. 7b. As shown in FIG. 7b, when CDRX is configured for the terminal device, after sending a BSR on a non-last CG PUSCH resource of CG PUSCH resources after specific "on duration", the terminal device may start the second timer (where duration corresponding to the second timer is denoted as waiting time in the figure), and start the first timer (denoted as an activity timer in the figure) after the second timer expires.

It can be learned from the technical solutions shown in FIG. 6a, FIG. 6b, FIG. 7a, and FIG. 7b that, when CDRX is configured for the terminal device, the terminal device reports a BSR on a CG PUSCH in the current periodicity (including two cases: on the last CG PUSCH and on the non-last CG PUSCH in the current periodicity), and the network device learns, based on the BSR or through calculation, whether the terminal device needs the DG for transmission. If the DG is required for transmission of the remaining data, the terminal device is triggered to start the activity timer (based on an existing timer or a newly designed timer), to enable the terminal device to enter a "wake-up" state and monitor the PDCCH. In comparison with the manners shown in FIG. 4b to FIG. 4d, this solution can greatly reduce a delay of transmission performed by using the DG when the terminal device still has remaining data after sending data on the CG resource, and improve a system capacity. In addition, the terminal device is not always in the wake-up state, and battery power of the terminal device is saved.

In Embodiment 3, when DRX (or CDRX) is not configured for the terminal device, the terminal device and the network device may perform a process described in FIG. 8a. In an implementation process shown in FIG. 8a, for example, the first information is carried in the last time unit in the N time units included in the CG resource.

801: The terminal device reports a BSR (that is, the first information includes the BSR) on a last CG PUSCH in a current CG periodicity. In other words, the terminal device notifies, by using the BSR, the network device whether there is data whose transmission is to be performed.

It should be noted that a process in which the terminal device sends the BSR in step 801 is an implementation example of step S501. For an implementation process of step 801, refer to the implementation process of step S501, and corresponding technical effects are achieved. Details are not described herein again.

Optionally, in an uplink scenario in which the BSR is used to notify the network device that data whose uplink transmission is to be performed may be an XR service, there is still remaining data (or referred to as to-be-sent data) after the data is sent on the CG resource in the current periodicity.

802: The network device determines whether a UE (namely, the terminal device) requires a DG for transmission. In step 802, a process performed by the network device may include steps 803 and 806, to perform the determining process.

803: The network device determines whether the BSR indicates "not empty (Not empty)", and performs step 804 when determining that the BSR indicates "not empty", or performs step 806 when determining that the BSR does not indicate "not empty".

804: When determining in step 803 that the BSR indicates "not empty", the network device triggers to start an additional monitoring window for transmission by using the DG and monitoring of the PDCCH. The monitoring window is implemented through the first timer.

For example, in step 804, the first timer may be indicated by using a field "monitoringSlotPeriodicityAndOffset" in SearchSpace in the RRC signaling. "monitoringSlotPeriodicityAndOffset" represents a periodicity of the monitoring window (that is, a time period corresponding to the first timer). On this basis, a "monitoringwaitingtime" field is added, to indicate a range of the waiting time, that is, the second timer.

805: After step 804, start the DG to perform transmission of the remaining data. In step 805, the network device sends the second information (namely, DCI corresponding to the BSR) within duration corresponding to the first timer started in step 804; and the terminal device monitor the PDCCH within the duration corresponding to the first timer started in step 804, to receive the second information (namely, the DCI corresponding to the BSR).

806: End the procedure.

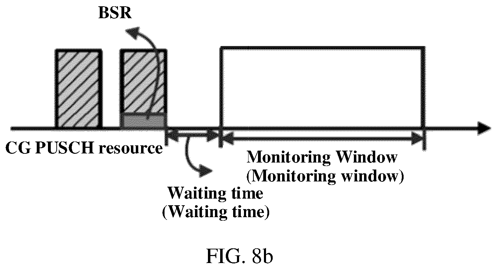

The technical solution shown in FIG. 8a may be implemented in a process shown in FIG. 8b. As shown in FIG. 8b, when CDRX is not configured for the terminal device, after sending a BSR on a last CG PUSCH resource of CG PUSCH resources, the terminal device may start the second timer (where duration corresponding to the second timer is denoted as waiting time in the figure), and start the first timer (denoted as a monitoring window in the figure) after the second timer expires.

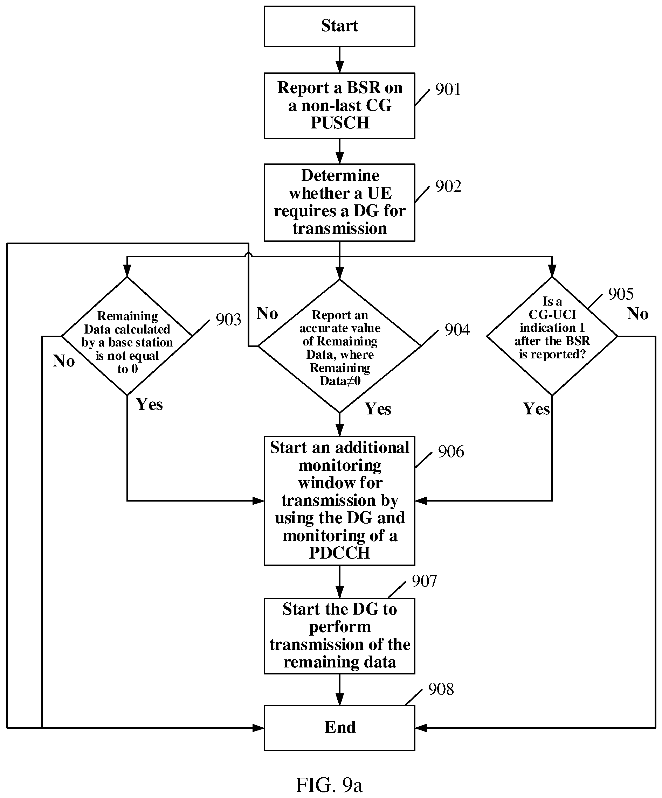

In Embodiment 4, when DRX (or CDRX) is not configured for the terminal device, the terminal device and the network device may perform a process described in FIG. 9a. In an implementation process shown in FIG. 9a, for example, the first information is carried in the non-last time unit in the N time units included in the CG resource.

901: The terminal device reports a BSR (that is, the first information includes the BSR) on a non-last CG PUSCH. In other words, the terminal device notifies, by using the BSR, the network device whether there is data whose transmission is to be performed.

902: The network device determines whether a UE (namely, the terminal device) requires a DG for transmission. In step 902, a process performed by the network device may include steps 903, 904, and 905, to perform the determining process.

903: If the amount of the remaining data calculated by the base station (namely, the network device) is greater than 0 (for example, may be denoted as "Remaining Data≠0"), perform step 906; or if the amount of the remaining data calculated by the base station (namely, the network device) is equal to 0, perform step 908. In other words, after the BSR is reported, the terminal device and the network device need to configure any one of Manner 1 to Manner 3 shown in step 702 and a same manner for defining Transmission Data. Through calculation, the network device calculates whether the amount of the remaining data is equal to 0 to determine whether the terminal device requires the DG for transmission. If Remaining Data≠0, it indicates that the terminal device requires the DG for transmission.

904: The terminal device reports an accurate value, where Remaining Data≠0. In other words, the terminal device may perform step 906 when determining, based on the BSR, that the value of Remaining Data is not equal to 0, or perform step 908 when determining, based on the BSR, that the value of Remaining Data is equal to 0. In other words, the terminal device reports the accurate value of Remaining Data based on the BSR sent in step 901, and if the reported value is not 0, it indicates that there is remaining data, and the DG is required for data transmission.

905: After the terminal device reports the BSR, based on whether a CG-UCI indication is 1, the terminal device performs step 906 when the CG-UCI indication is "1", indicating that data remains (or indicates that there is remaining data); or performs step 908 when the CG-UCI indication is "0", indicating that no data remains (or indicates that there is no remaining data). In other words, after reporting the BSR in step 901, the terminal device indicates, by using the CG-UCI, whether the terminal device still needs to perform transmission of data. In other words, the network device may determine, based on whether the CG-UCI indication is 1, whether there is data whose transmission needs to be performed by using the DG.

It should be noted that, for implementation processes of step 903 to step 905, refer to the foregoing implementation processes of step 703 to step 705.

906. When determining that Remaining Data≠0 in any one of step 903 to step 905, the network device triggers to start an additional monitoring window for transmission by using the DG and monitoring of the PDCCH. The monitoring window is implemented through the first timer.

It should be noted that, for an implementation process of step 906, refer to the implementation process of step 804.

907: Start the DG to perform transmission of the remaining data. In step 907, the network device sends the second information (namely, DCI corresponding to the BSR) within duration corresponding to the first timer started in step 906; and the terminal device monitor the PDCCH within the duration corresponding to the first timer started in step 906, to receive the second information (namely, the DCI corresponding to the BSR).

908: End the procedure.

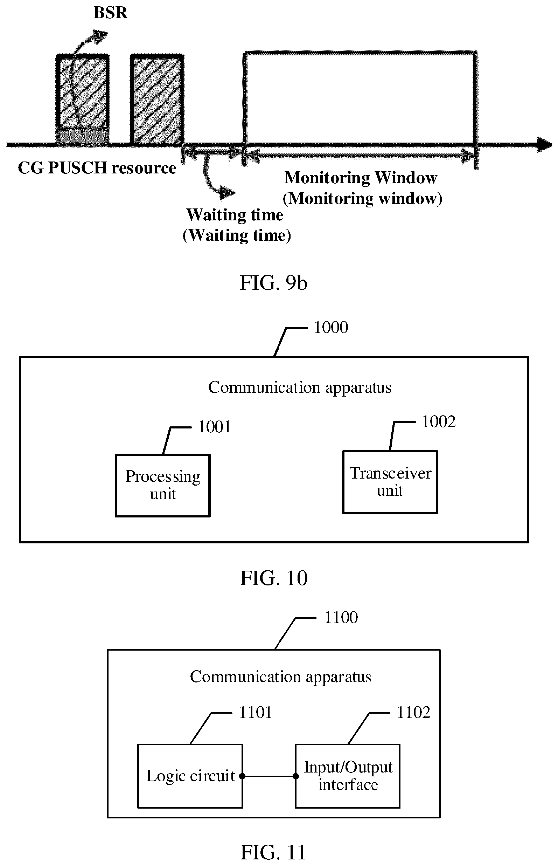

It can be learned from the technical solutions shown in FIG. 8a, FIG. 8b, FIG. 9a, and FIG. 9b that, when CDRX is not configured for the terminal device, the terminal device reports a BSR on a CG PUSCH in the current periodicity (including two cases: on the last CG PUSCH and on the non-last CG PUSCH in the current periodicity), and the network device learns, based on the BSR or through calculation, whether the terminal device needs the DG for transmission. If the DG is required for transmission of the remaining data, an additional monitoring window is started, so that the terminal device can monitor the PDCCH for transmission by using the DG. Compared with the original technology, this solution can greatly reduce a delay of transmission performed by using the DG when the terminal device still has remaining data after sending data on the existing CG resource, and improve a system capacity. In addition, the terminal device is not always in the wake-up state, and battery power of the terminal device is saved.

The foregoing describes this application from a perspective of the method, and the following further describes other embodiments provided in this application.

FIG. 10 is a diagram of implementation of a communication apparatus according to this application. The communication apparatus 1000 includes a processing unit 1001 and a transceiver unit 1002. The communication apparatus 1000 can implement functions of the communication apparatus (including the terminal device, the network device, and the like) in the foregoing method embodiments, and therefore can also achieve beneficial effects of the foregoing method embodiments. In this embodiment of this application, the communication apparatus 1000 may be the terminal device (or the network device), or may be an integrated circuit, an element, or the like inside the terminal device (or the network device), for example, a chip. In the following embodiments, an example in which the communication apparatus 1000 is the terminal device or the network device is used for description.

In a possible implementation, when the apparatus 1000 is configured to perform the method performed by the terminal device in the foregoing embodiments, the processing unit 1001 starts a first timer after the transceiver unit 1002 sends first information, where the first information is used to request an uplink resource, and the first timer indicates a time window for monitoring a physical downlink control channel PDCCH; and the processing unit 1001 receives second information on the PDCCH before the first timer expires, where the second information indicates the uplink resource.

In a possible implementation, the first information is carried in an $N^{th}$ time unit in N time units included in a configured grant CG resource, where N is a positive integer greater than 1.

In a possible implementation, the first information is carried in a $k^{th}$ time unit in N time units included in a CG resource, where N is a positive integer greater than 1, and k is a positive integer less than N.

In a possible implementation, the first information is used to request an uplink resource corresponding to first data.

The transceiver unit 1002 is specifically configured to send the first information when an amount of the first data is greater than 0.

In a possible implementation, the amount of the first data is determined based on a difference between a total data amount and a transmitted data amount.

In a possible implementation, the transmitted data amount includes any one of the following: an amount of data allowed to be transmitted on the CG resource within preset duration; an amount of data allowed to be transmitted on the CG resource within duration indicated by a packet delay budget PDB; or an amount of data allowed to be transmitted in one or more CG transmission opportunities in the CG resource.

In a possible implementation, the first information includes at least either of the following: first indication information, indicating that the first data is not empty; or second indication information, indicating the amount of the first data.

In a possible implementation, the first information is carried in a buffer status report BSR; the first information is carried in uplink control information UCI; or the first information is carried in a BSR and UCI.

In a possible implementation, the first timer includes any one of the following: a discontinuous reception DRX inactivity timer; an activity timer of a DG resource; a DRX uplink retransmission timer; or a time window length indicated by a monitoring slot periodicity and offset.

In a possible implementation, the processing unit 1001 starts a second timer after the transceiver unit 1002 sends the first information, and the processing unit 1001 starts the first timer when the second timer expires, where the second timer indicates waiting time.

In a possible implementation, the second timer includes any one of the following: a drx-HARQ-RTT-TimerUL; a HARQ-RTT timer of the DG resource; or a monitoring waiting time timer.

In another possible implementation, when the apparatus 1000 is configured to perform the method performed by the network device in the foregoing embodiments, the processing unit 1001 starts a first timer after the transceiver unit 1002 receives first information, where the first information is used to request an uplink resource, and the first timer indicates a time window for monitoring a physical downlink control channel PDCCH; and the transceiver unit 1002 sends second information before the first timer expires, where the second information indicates the uplink resource.

In a possible implementation, the first information is carried in an $N^{th}$ time unit in N time units included in a configured grant CG resource, where N is a positive integer greater than 1.

In a possible implementation, the first information is carried in a $k^{th}$ time unit in N time units included in a CG resource, where N is a positive integer greater than 1, and k is a positive integer less than N.

In a possible implementation, the first information is used to request an uplink resource corresponding to first data; and the transceiver unit 1002 sends the second information when an amount of the first data is greater than 0.

In a possible implementation, the amount of the first data is determined based on a difference between a total data amount and a transmitted data amount.

In a possible implementation, the transmitted data amount includes any one of the following: an amount of data allowed to be transmitted on the CG resource within preset duration; an amount of data allowed to be transmitted on the CG resource within duration indicated by a packet delay budget PDB; or an amount of data allowed to be transmitted in one or more CG transmission opportunities in the CG resource.

In a possible implementation, the first information includes at least either of the following: first indication information, indicating that the first data is not empty; or second indication information, indicating the amount of the first data.

In a possible implementation, the first information is carried in a buffer status report BSR; the first information is carried in uplink control information UCI; or the first information is carried in a BSR and UCI.

In a possible implementation, the first timer includes any one of the following: a discontinuous reception DRX inactivity timer; an activity timer of a DG resource; a DRX uplink retransmission timer; or a time window length indicated by a monitoring slot periodicity and offset.

It should be noted that for details of content such as an information execution process of the unit of the communication apparatus 1200, refer to the descriptions in the foregoing method embodiments of this application. The details are not described herein again.

FIG. 11 is another diagram of a structure of a communication apparatus 1100 according to this application. The communication apparatus 1100 includes at least an input/output interface 1102. The communication apparatus 1100 may be a chip or an integrated circuit.

Optionally, the communication apparatus further includes a logic circuit 1101.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

Optionally, when the communication apparatus 1100 is the terminal device (or a component in the terminal device) in the foregoing embodiments, the logic circuit 1101 starts a first timer after the input/output interface 1102 receives first information, where the first information is used to request an uplink resource, and the first timer indicates a time window for monitoring a physical downlink control channel PDCCH; and the input/output interface 1102 sends second information before the first timer expires, where the second information indicates the uplink resource.

Optionally, when the communication apparatus 1100 is the network device (or a component in the network device) in the foregoing embodiments, the logic circuit 1101 starts a first timer after the input/output interface 1102 receives first information, where the first information is used to request an uplink resource, and the first timer indicates a time window for monitoring a physical downlink control channel PDCCH; and the input/output interface 1102 sends second information before the first timer expires, where the second information indicates the uplink resource.

The logic circuit 1101 and the input/output interface 1102 may further perform other steps performed by the terminal device or the network device in any embodiment, and achieve corresponding beneficial effects. Details are not described herein again.

In a possible implementation, the processing unit 1001 shown in FIG. 10 may be the logic circuit 1101 in FIG. 11.

Optionally, the logic circuit 1101 may be a processing apparatus, and some or all of functions of the processing apparatus may be implemented by software. Some or all of the functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processing circuits (digital signal processors, DSPs), micro controller units (micro controller units, MCUs), programmable controllers (programmable logic devices, PLDs) or other integrated chips, or any combination of the foregoing chips or processors.

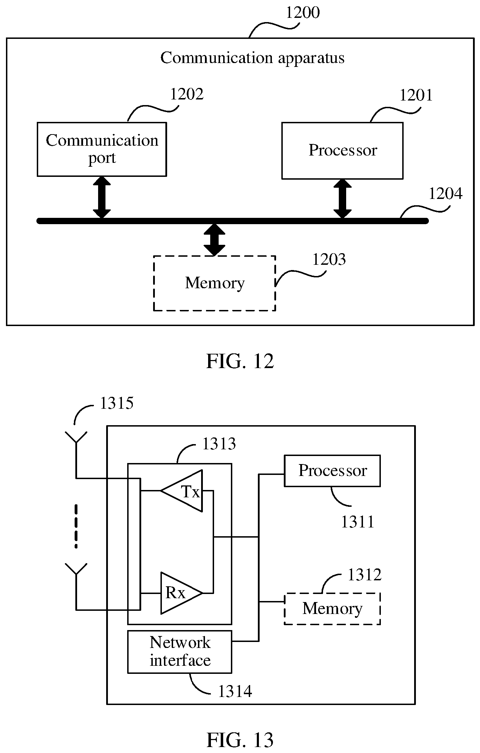

FIG. 12 shows the communication apparatus 1200 in the foregoing embodiment according to an embodiment of this application. The communication apparatus 1200 may be specifically the communication apparatus used as the terminal device in the foregoing embodiments.

In a possible diagram of a logical structure of the communication apparatus 1200, the communication apparatus 1200 may include but is not limited to at least one processor 1201 and a communication port 1202.

Further, optionally, the apparatus may include at least either of a memory 1203 and a bus 1204. In this embodiment of this application, the at least one processor 1201 is configured to perform control processing on an action of the communication apparatus 1200.

In addition, the processor 1201 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 1200 shown in FIG. 12 may be specifically configured to implement steps implemented by the terminal device in the foregoing method embodiments, and achieve technical effects corresponding to the terminal device. For a specific implementation of the communication apparatus shown in FIG. 12, refer to the descriptions in the foregoing method embodiments. Details are not described herein again.

FIG. 13 is a diagram of a structure of a communication apparatus 1300 in the foregoing embodiment according to an embodiment of this application. The communication apparatus 1300 may be specifically the communication apparatus used as the network device in the foregoing embodiments. For the structure of the communication apparatus, refer to the structure shown in FIG. 13.

The communication apparatus 1300 includes at least one processor 1311 and at least one network interface 1314. Further, optionally, the communication apparatus further includes at least one memory 1312, at least one transceiver 1313, and one or more antennas 1315. The processor 1311, the memory 1312, the transceiver 1313, and the network interface 1314 are connected, for example, through a bus. In this embodiment of this application, the connection may include various interfaces, transmission lines, buses, or the like. This is not limited in this embodiment. The antenna 1315 is connected to the transceiver 1313. The network interface 1314 is configured to enable the communication apparatus to communicate with another communication device through a communication link. For example, the network interface 1314 may include a network interface between the communication apparatus and a core network device, for example, an S1 interface. The network interface may include a network interface between the communication apparatus and another communication apparatus (for example, another network device or core network device), for example, an X2 interface or an Xn interface.

The processor 1311 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 1311 in FIG. 13 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to improve a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1312 may exist independently, and is connected to the processor 1311. Optionally, the memory 1312 and the processor 1311 may be integrated together, for example, integrated into a chip. The memory 1312 can store program code for executing the technical solutions in embodiments of this application, and execution is controlled by the processor 1311. Various types of executed computer program code may also be considered as drivers of the processor 1311.

FIG. 13 shows only one memory and one processor. An actual terminal device may include a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1313 may be configured to support receiving or sending of a radio frequency signal between the communication apparatus and the terminal, and the transceiver 1313 may be connected to the antenna 1315. The transceiver 1313 includes a transmitter machine Tx and a receiver machine Rx. Specifically, the one or more antennas 1315 may receive a radio frequency signal. The receiver machine Rx in the transceiver 1313 is configured to receive the radio frequency signal from the antenna, convert the radio frequency signal into a digital baseband signal or a digital intermediate frequency signal, and provide the digital baseband signal or the digital intermediate frequency signal for the processor 1311, so that the processor 1311 further processes the digital baseband signal or the digital intermediate frequency signal, for example, performs demodulation processing and decoding processing. In addition, the transmitter machine Tx in the transceiver 1313 is further configured to receive a modulated digital baseband signal or digital intermediate frequency signal from the processor 1311, convert the modulated digital baseband signal or digital intermediate frequency signal into a radio frequency signal, and send the radio frequency signal through the one or more antennas 1315. Specifically, the receiver machine Rx may selectively perform one-level or multi-level down mixing processing and analog-to-digital conversion processing on the radio frequency signal, to obtain a digital baseband signal or a digital intermediate frequency signal. A sequence of the down mixing processing and the analog-to-digital conversion processing is adjustable. The transmitter machine Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing is adjustable. The digital baseband signal and the digital intermediate frequency signal may be collectively referred to as a digital signal.

The transceiver 1313 may also be referred to as a transceiver unit, a transceiver machine, a transceiver apparatus, or the like. Optionally, a device that is in the transceiver unit and that is configured to implement a receiving function may be considered as a receiving unit, and a device that is in the transceiver unit and that is configured to implement a sending function may be considered as a sending unit. In other words, the transceiver unit includes the receiving unit and the sending unit. The receiving unit may also be referred to as a receiver machine, an input port, a receiving circuit, or the like. The sending unit may be referred to as a transmitter machine, a transmitter, a transmitter circuit, or the like.

It should be noted that, the communication apparatus 1300 shown in FIG. 13 may be specifically configured to implement steps implemented by the network device in the foregoing method embodiments, and achieve technical effects corresponding to the network device. For a specific implementation of the communication apparatus 1300 shown in FIG. 13, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the terminal device.

An embodiment of this application further provides a computer program product storing one or more computers. When the computer program product is executed by a processor, the processor performs the method in the possible implementations of the network device.

An embodiment of this application further provides a chip system. The chip system includes at least one processor, configured to support a communication apparatus in implementing a function in the possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the terminal device or the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A communication method, comprising:

   starting, by a terminal device, a first timer after sending first information, wherein the first information is used to request an uplink resource, and the first timer indicates a time window for monitoring a physical downlink control channel PDCCH; and
   receiving, by the terminal device, second information on the PDCCH before the first timer expires, wherein the second information indicates the uplink resource.

2. The method according to claim 1, wherein the first information is carried in an $N^{th}$ time unit in N time units comprised in a configured grant CG resource, wherein N is a positive integer greater than 1.

3. The method according to claim 1, wherein the first information is carried in a $k^{th}$ time unit in N time units comprised in a CG resource, wherein N is a positive integer greater than 1, and k is a positive integer less than N.

4. The method according to any one of claims 1 to 3, wherein the first information is used to request an uplink resource corresponding to first data; and

that the terminal device sends the first information comprises:
sending, by the terminal device, the first information when an amount of the first data is greater than 0.

5. The method according to claim 4, wherein the amount of the first data is determined based on a difference between a total data amount and a transmitted data amount.

6. The method according to claim 5, wherein the transmitted data amount comprises any one of the following:

an amount of data allowed to be transmitted on the CG resource within preset duration;
an amount of data allowed to be transmitted on the CG resource within duration indicated by a packet delay budget PDB; or
an amount of data allowed to be transmitted in one or more CG transmission opportunities in the CG resource.

7. The method according to any one of claims 1 to 6, wherein the first information comprises at least either of the following:

first indication information, indicating that the first data is not empty; or
second indication information, indicating the amount of the first data.

8. The method according to any one of claims 1 to 7, wherein

the first information is carried in a buffer status report BSR;
the first information is carried in uplink control information UCI; or
the first information is carried in a BSR and UCI.

9. The method according to any one of claims 1 to 8, wherein the first timer comprises any one of the following:

a discontinuous reception DRX inactivity timer;
an activity timer of a DG resource;
a DRX uplink retransmission timer; or
a time window length indicated by a monitoring slot periodicity and offset.

10. The method according to any one of claims 1 to 9, wherein starting, by the terminal device, the first timer after sending the first information comprises:
starting, by the terminal device, a second timer after sending the first information, and starting the first timer when the second timer expires, wherein the second timer indicates waiting time.

11. The method according to claim 10, wherein the second timer comprises any one of the following:

a discontinuous reception uplink hybrid automatic repeat request round trip time timer drx-HARQ-RTT-TimerUL;
a HARQ-RTT timer of the DG resource; or
a monitoring waiting time timer.

12. A communication method, comprising:

starting, by a network device, a first timer after receiving first information, wherein the first information is used to request an uplink resource, and the first timer indicates a time window for monitoring a physical downlink control channel PDCCH; and
sending, by the network device, second information before the first timer expires, wherein the second information indicates the uplink resource.

13. The method according to claim 12, wherein the first information is carried in an $N^{th}$ time unit in N time units comprised in a configured grant CG resource, wherein N is a positive integer greater than 1.

14. The method according to claim 12, wherein the first information is carried in a $k^{th}$ time unit in N time units comprised in a CG resource, wherein N is a positive integer greater than 1, and k is a positive integer less than N.

15. The method according to any one of claims 12 to 14, wherein the first information is used to request an uplink resource corresponding to first data; and

sending, by the network device, the second information comprises:

sending, by the network device, the second information when an amount of the first data is greater than 0.

16. The method according to claim 15, wherein the amount of the first data is determined based on a difference between a total data amount and a transmitted data amount.

17. The method according to claim 16, wherein the transmitted data amount comprises any one of the following:

an amount of data allowed to be transmitted on the CG resource within preset duration;

an amount of data allowed to be transmitted on the CG resource within duration indicated by a packet delay budget PDB; or

an amount of data allowed to be transmitted in one or more CG transmission opportunities in the CG resource.

18. The method according to any one of claims 12 to 17, wherein the first information comprises at least either of the following:

first indication information, indicating that the first data is not empty; or

second indication information, indicating the amount of the first data.

19. The method according to any one of claims 12 to 18, wherein

the first information is carried in a buffer status report BSR;

the first information is carried in uplink control information UCI; or

the first information is carried in a BSR and UCI.

20. The method according to any one of claims 12 to 19, wherein the first timer comprises any one of the following:

a discontinuous reception DRX inactivity timer;

an activity timer of a DG resource;

a DRX uplink retransmission timer; or

a time window length indicated by a monitoring slot periodicity and offset.

21. A communication apparatus, comprising a processing unit and a transceiver unit, wherein

the processing unit and the transceiver unit are configured to perform the method according to any one of claims 1 to 11.

22. A communication apparatus, comprising a processing unit and a transceiver unit, wherein

the processing unit and the transceiver unit are configured to perform the method according to any one of claims 12 to 20.

23. A communication apparatus, comprising at least one processor and a memory, wherein the at least one processor is coupled to the memory; and

the processor is configured to perform the method according to any one of claims 1 to 11.

24. A communication apparatus, comprising at least one processor and a memory, wherein the at least one processor is coupled to the memory; and

the processor is configured to perform the method according to any one of claims 12 to 20.

25. A communication system, comprising the communication apparatus according to claim 21 and the communication apparatus according to claim 22, or comprising the communication apparatus according to claim 23 and the communication apparatus according to claim 24.

26. A computer-readable storage medium, wherein the medium stores instructions, and when the instructions are executed by a computer, the method according to any one of claims 1 to 20 is implemented.

27. A computer program product, comprising instructions, wherein when the instructions are run on a computer, the computer is enabled to perform the method according to any one of claims 1 to 20.

FIG. 1

FIG. 2

FIG. 3a

(PDCCH reception here)
PDCCH Reception Here

(Discontinuous
reception inactive time)
DRX Inactivity Time

(On duration)
ON Duration

DRX Cycle
(Discontinuous reception cycle)

DRX Cycle
(Discontinuous reception cycle)

FIG. 3b

(PDCCH reception here)
PDCCH Reception Here

(Discontinuous reception
inactive time)
DRX Inactivity Time

(On duration)
ON Duration

DRX Cycle
(Discontinuous reception cycle)

(Discontinuous reception command
MAC CE reception here)

DRX Command MAC CE Reception Here
(Both DRX Inactivity timer and On Duration
Timer stop here)
(Both a discontinuous reception inactivity timer
and an on duration timer stop here)

FIG. 3c

**(Discontinuous reception uplink retransmission timer)**

*drx-Retransmission TimerUL*

**(Uplink grant)**  **(Uplink)**

**UL Grant**  **UL**

**Active time**  (Active time)

*drx-HARQ-RTT-TimerUL*

**(Discontinuous reception uplink hybrid automatic repeat request round trip time timer)**

FIG. 3d

```
   UE                         gNodeB

        ————————— SR ————————→

        ←———————— DCI ————————

        ————————— BSR ————————→

        ←———————— DCI ————————

        ———————— Uplink data ————————→
```

FIG. 4a

FIG. 4b

FIG. 4c

FIG. 4d

Network
device

Terminal
device

S501: First information

S502: Second information

FIG. 5

```
                    ┌──────────────┐
                    │    Start     │
                    └──────┬───────┘
                           │
                    ┌──────▼───────┐
                    │ Report a BSR on│
                    │   a last CG   │  ╱ 601
                    │  PUSCH in a   │
                    │    current    │
                    │  periodicity  │
                    └──────┬───────┘
                           │
                    ┌──────▼───────┐
                    │  Determine   │
                    │ whether a UE │  ╱ 602
                    │ requires a DG│
                    │for transmission│
                    └──────┬───────┘
                           │
                        ╱ 603
                    ◇───────────◇
                    │   BSR     │      No
                    │ Not empty │──────────────┐
                    ◇─────┬─────◇              │
                          │ Yes                │
                    ┌─────▼──────┐ ╱ 604        │
                    │Trigger the UE│             │
         ┌──────────│ to start an │──────────┐  │
         │          │activity timer│          │  │
         │          │  and enter a │          │  │
         │          │ "wake-up" state│        │  │
         │          └──────┬───────┘          │  │
         │                 │                  │  │
  ┌──────▼─────┐   ┌───────▼──────┐   ┌───────▼──────────┐
  │Start a new │   │ Start a new  │   │No longer automatically│
  │ original   │╱605│timer, namely, a│╱606│ disable a drx-   │╱607
  │activity timer│  │drx-DG-activity│  │Retransmission TimerUL│
  └──────┬─────┘   │    Timer     │   │after retransmission ends│
         │          └───────┬──────┘   └───────┬──────────┘
         │                  │ ╱ 608            │
         │          ┌───────▼──────┐           │
         │          │ Start the DG to│          │
         └─────────▶│   perform    │◀──────────┘
                    │ transmission of│
                    │ remaining data│
                    └───────┬──────┘
                            │ ╱ 609
                    ┌───────▼──────┐
                    │     End      │◀──────────────┘
                    └──────────────┘
```

FIG. 6a

FIG. 6b

FIG. 7a

**BSR**

On Duration
(On duration)

On Duration
(On duration)

CG PUSCH resource

Activity time  (Active time)

Waiting time
(Waiting time)

FIG. 7b

Start

Report a BSR on a
last CG PUSCH in a
current periodicity — 801

Determine whether a
UE requires a DG
for transmission — 802

803

BSR Not empty

No

Yes

Start an additional
monitoring window
for transmission by
using the DG and
monitoring of a
PDCCH — 804

Start the DG to
perform
transmission of
remaining data — 805

806

End

FIG. 8a

BSR

CG PUSCH resource

Waiting time
(Waiting time)

Monitoring Window
(Monitoring window)

FIG. 8b

FIG. 9a

BSR

CG PUSCH resource

Waiting time
(Waiting time)

Monitoring Window
(Monitoring window)

FIG. 9b

1000

Communication apparatus

1001

Processing unit

1002

Transceiver unit

FIG. 10

1100

Communication apparatus

1101

Logic circuit

1102

Input/Output interface

FIG. 11

1200

Communication apparatus

1202

Communication port

1201

Processor

1204

1203

Memory

FIG. 12

1315

1313

Tx

Processor

1311

1312

Rx

Memory

Network interface

1314

FIG. 13

## INTERNATIONAL SEARCH REPORT

| International application No. |
|---|
| **PCT/CN2023/140196** |

| A. | CLASSIFICATION OF SUBJECT MATTER |
|---|---|
| | H04W 72/21(2023.01)i |

According to International Patent Classification (IPC) or to both national classification and IPC

| B. | FIELDS SEARCHED |
|---|---|

Minimum documentation searched (classification system followed by classification symbols)

IPC:H04L, H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP, CNKI, IEEE: 第一定时器 时间窗 上行资源 超时uplink resource PDCCH time window timer

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110351898 A (HUAWEI TECHNOLOGIES CO., LTD.) 18 October 2019 (2019-10-18) description, paragraphs [0155]-[0265] | 1-27 |
| X | WO 2021217351 A1 (GUANGDONG OPPO MOBILE COMMUNICATIONS CO., LTD.) 04 November 2021 (2021-11-04) description, page 4, line 36-page 11, line 36 | 1-27 |
| A | WO 2019153126 A1 (HUAWEI TECHNOLOGIES CO., LTD.) 15 August 2019 (2019-08-15) entire document | 1-27 |
| A | US 2014086110 A1 (LG ELECTRONICS INC.) 27 March 2014 (2014-03-27) entire document | 1-27 |
| A | WO 2014109769 A1 (NOKIA CORP. et al.) 17 July 2014 (2014-07-17) entire document | 1-27 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 February 2024** | **04 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140196**

| Patent document cited in search report | | | Publication date (day/month/year) | Patent family member(s) | | | Publication date (day/month/year) |
|---|---|---|---|---|---|---|---|
| CN | 110351898 | A | 18 October 2019 | US | 2021014028 | A1 | 14 January 2021 |
| | | | | KR | 20200135819 | A | 03 December 2020 |
| | | | | WO | 2019192342 | A1 | 10 October 2019 |
| | | | | CA | 3095219 | A1 | 10 October 2019 |
| | | | | EP | 3764733 | A1 | 13 January 2021 |
| WO | 2021217351 | A1 | 04 November 2021 | CN | 115004789 | A | 02 September 2022 |
| | | | | US | 2023048959 | A1 | 16 February 2023 |
| | | | | EP | 4142379 | A1 | 01 March 2023 |
| | | | | CN | 116916426 | A | 20 October 2023 |
| WO | 2019153126 | A1 | 15 August 2019 | CN | 111684835 | A | 18 September 2020 |
| US | 2014086110 | A1 | 27 March 2014 | None | | | |
| WO | 2014109769 | A1 | 17 July 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211701382